Europäisches Patentamt

European Patent Office

Office européen des brevets

(19)

(11) **EP 0 705 512 B1**

(12) **EUROPEAN PATENT SPECIFICATION**

(45) Date of publication and mention
of the grant of the patent:
**01.10.1997 Bulletin 1997/40**

(21) Application number: **94920280.8**

(22) Date of filing: **20.06.1994**

(51) Int Cl.$^6$: **H04L 25/02**

(86) International application number:
**PCT/US94/06956**

(87) International publication number:
**WO 95/01032 (05.01.1995 Gazette 1995/02)**

(54) **METHOD AND APPARATUS FOR DETERMINING THE DATA RATE OF A RECEIVED SIGNAL**

VERFAHREN UND EINRICHTUNG ZUR BESTIMMUNG DER DATENRATE EINES EMPFANGENEN
SIGNALS

PROCEDE ET APPAREIL DE DETERMINATION DU DEBIT DE DONNES D'UN SIGNAL REçU

(84) Designated Contracting States:
**AT BE CH DE DK ES FR GB GR IE IT LI LU MC NL PT SE**
Designated Extension States:
**SI**

(30) Priority: **18.06.1993 US 79196**
**26.04.1994 US 233570**

(43) Date of publication of application:
**10.04.1996 Bulletin 1996/15**

(73) Proprietor: **QUALCOMM INCORPORATED**
**San Diego, California 92121 (US)**

(72) Inventors:
• **BUTLER, Brian K.**
**Solana Beach, CA 92075 (US)**
• **PADOVANI, Roberto**
**San Diego, CA 92130 (US)**
• **ZEHAVI, Ephraim**
**Haifa - Israel, 34751 (IS)**

(74) Representative: **Walsh, Michael Joseph et al**
**TOMKINS & CO.**
**5, Dartmouth Road**
**Dublin 6 (IE)**

(56) References cited:
• **PATENT ABSTRACTS OF JAPAN vol. 6, no. 119 (E-116) (997) 3 July 1982 & JP,A,57 046 557 (NIPPON DENKI)**
• **PATENT ABSTRACTS OF JAPAN vol. 6, no. 132 (E-119) (1010) 17 July 1982 & JP,A,57 058 447 (OKI DENKI KOGYO)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**BACKGROUND OF THE INVENTION**

The present invention relates generally to digital communications. More specifically, the present invention relates to a system in which variable rate data is transmitted without an indication of the data rate and is received at a communications receiver where the data rate of the transmitted data is determined for use in processing the data.

In digital communications systems, particularly those which use spread spectrum modulation, a transmitter may employ a vocoding system which encodes voice information at a variable rate to lower the data rate during pauses or other absences of voice activity, thereby reducing the level of interference caused by this transmitter to receivers other than the intended receiver. At the receiver, or otherwise associated with the receiver, a vocoding system is employed for reconstructing the voice information. It should be understood that in addition to voice information, non-voice information alone or a mixture of the two may be transmitted to the receiver.

A vocoder which is suited for application in this environment is described in U.S. Patent No. 5,414,796, issued May 9, 1995 entitled "VARIABLE RATE VOCODER,". This vocoder produces from digital samples of the voice information encoded data at four different rates, e.g. approximately 8,000 bits per second (bps), 4,000 bps, 2,000 bps and 1,000 bps, based on voice activity during a 20 millisecond (ms) frame. Each frame of vocoder data is formatted with overhead bits as 9,600 bps, 4,800 bps, 2,400 bps, and 1,200 bps data frames. The highest rate data frame which corresponds to a 9,600 bps frame is referred to as a "full rate" frame; a 4,800 bps data frame is referred to as a "half rate" frame; a 2,400 bps data frame is referred to as a "quarter rate" frame; and a 1,200 bps data frame is referred to as an "eighth rate" frame. In neither the encoding process nor the frame formatting process is rate information included in the data.

Additional details on the formatting of the vocoder data into data frames are described in US-A-5,504,773, entitled "METHOD AND APPARATUS FOR THE FORMATTING OF DATA FOR TRANSMISSION." The data frames may be further processed, spread spectrum modulated and transmitted as described in U.S. Patent No. 5,103,459, entitled "SYSTEM AND METHOD FOR GENERATING WAVEFORMS IN A CDMA CELLULAR TELEPHONE SYSTEM," issued April 7, 1992.

Since rate information for each frame is not transmitted, the receiver must determine from the received frame of data the rate at which they were encoded in order for the vocoder to properly reconstruct the voice information. Although the transmitter could transmit information regarding the rate at which the frame was encoded this would reduce system resources available for transmitting voice and non-voice data. Furthermore corruption in the transmitted rate information would adversely affect the entire frame. Thus, it is desirable for the receiver to determine the rate at which the frame was encoded without receiving rate information from the transmitter. These problems and deficiencies are dearly felt in the art and are solved by the present invention in the manner described below.

**SUMMARY OF THE INVENTION**

The invention in its widest aspect is set forth in method claim 1 and apparatus claims 37 and 38.

The present invention relates to a system for determining at a receiver of a variable rate communications system the rate at which data has been encoded by a transmitter of the communications system. Although the present invention may be used in many communications systems, it is particularly useful in cellular communication systems that use a variable rate vocoder for encoding and decoding speech at a plurality of discrete rates or a variable rate data transfer protocol. Such communication systems include mobile telephone, personal communication devices, wireless local loop and private branch exchange, and particularly those that use spread spectrum modulation. The present invention may be used in the receivers of both the "mobile station" and the cell site or "base station" or wherever the receiving vocoder is located in a system such as a cellular telephone system to provide the receiver vocoder with rate information, thereby enabling the receiver vocoders to decode the encoded speech.

The present invention receives a frame consisting of a predetermined number of symbols which represents speech that was digitized and encoded by the transmitter vocoder during a predetermined time period. The received frame may consist of multiple copies of each symbol if the transmitter vocoder encoded the speech at less than a predetermined maximum rate.

Each frame of received symbols are decoded at each of the possible rates. Error metrics, which describe the quality of the decoded symbols for each frame decoded at each rate, are provided to a processor. The error metrics may include Cyclic Redundancy Check (CRC) results, Yamamoto Quality Metrics, and Symbol Error Rates. These error metrics are well-known in communications systems. The processor analyzes the error metrics using a novel decision process and determines the most probable rate at which the incoming symbols were encoded. The processor may provide the rate information to the receiver vocoder or other devices.

The foregoing, together with other features and advantages of the present invention, will become more apparent when referring to the following specification, claims, and accompanying drawings.

## BRIEF DESCRIPTION OF THE DRAWINGS

For a more complete understanding of our invention, we now refer to the following detailed description of the embodiments illustrated in the accompanying drawings, wherein:

Figure 1 is a block diagram showing the present invention in the receiver of a cellular telephone system;
Figure 2 is a block diagram of the rate determination apparatus of the base station receiver of a cellular telephone system;
Figure 3 is a block diagram of the rate determination apparatus of the mobile station receiver of a cellular telephone system; and
Figure 4 is a flow diagram of a rate determination process.

## DESCRIPTION OF THE PREFERRED EMBODIMENT

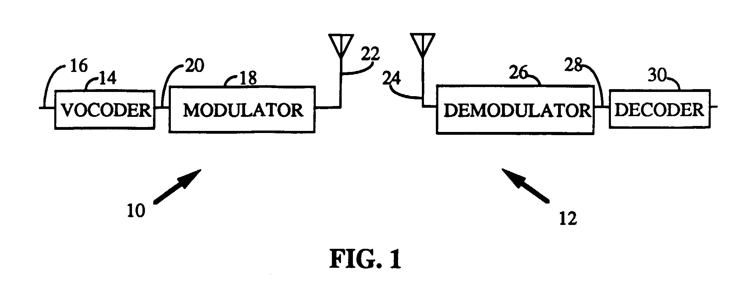

In Figure 1, a digital communication system is illustrated. For purposes of example this system is described herein within the context of a CDMA cellular telephone system. However it should be understood that the invention is applicable to other types of communication systems such as personal communication systems (PCS), wireless local loop, private branch exchange (PBX) or other known systems. Furthermore systems employing other well known transmission modulation schemes such as TDMA may employ the present invention. The system in Figure 1 comprises a transmitter 10 and a receiver 12, which may be either a base station (also known as a cell-site) receiver or a mobile station receiver. Communication from transmitter 10 to receiver 12 when receiver 12 is disposed in a mobile station is known as the "forward link," and communication from transmitter 10 to receiver 12 when receiver 12 is disposed in a base station is known as the "reverse link".

Transmitter 10 in an exemplary embodiment comprises a vocoder 14, which encodes voice data 16 for formatting into data frames of various data rates, e.g. frame rates of 9,600 bps, 4,800 bps, 2,400 bps, or 1,200 bps. Vocoder 14 selects a rate in response to the amount of voice activity in voice data 16, as described in the above-referenced U.S. Patent No. 5,414,796, and encodes the voice data accordingly. Vocoder data bits 20 and the determined rate are provided to modulator 18. Modulator 18 is described in the above-referenced U.S. Patent No. 5,103,459, and is briefly discussed herein for background information. Although the present invention is discussed with respect to four different data rates, it should be understood, however, that the teachings of the present invention are applicable to systems where a greater or lesser number of data rates may be employed. Furthermore the data rates discussed herein are for purposes of example and other data rates may be used. For example, an alternative set of frame rates may be 14,400 bps, 7,200 bps, 3,600 bps, and 1,800 bps.

By way of example, the following data frame information is provided for a further understanding of the frame formatting. As mentioned previously, all frames are 20 ms in duration. A vocoder full-rate frame is comprised of 160 data bits and 11 internal check bits. This full-rate vocoder frame is formatted by modulator 18 into a 9,600 bps transmission frame which is comprised of 192 bits. These 192 bits are formed from the 171 vocoder-produced data bits, a mode bit, 12 CRC bits and 8 tail bits. A vocoder half-rate frame is comprised of 80 bits and may be formatted into a 4,800 bps transmission frame of 96 bits. The 4,800 bps transmission frame is comprised of the 80 vocoder bits along with 8 CRC bits and 8 tail bits. A vocoder quarter-rate frame is comprised of 40 bits and may be formatted into a 2,400 bps transmission frame of 48 bits. The 2,400 bps transmission frame includes along with the 40 vocoder bits, 8 tail bits. Finally, a vocoder eighth-rate frame is comprised of 16 bits and may be formatted into a 1,200 bps transmission frame of 24 bits. The 1,200 bps transmission frame includes along with the 16 vocoder bits, 8 tail bits.

It should be understood that a mixture of voice and non-voice data may be formatted into a 9,600 bps transmission frame when less than full-rate vocoder data is provided. The mode bit and additional overhead bits are included in this type of frame to indicate the rate at which the voice data is encoded. Regardless of the rate of the voice data in this type of frame, the frame as received is determined to be a 9,600 bps frame which contains less than full-rate vocoder data. As such the overhead bits are used to override the output of a full-rate frame indication to the vocoder for processing of the portion of the bits in the frame which correspond to the less than full-rate frame vocoder data. Furthermore it should be understood that the vocoder data may be replaced in a full-rate transmission frame by non-voice data. Again in this case overhead bits included in the frame identify the frame of this type. In an alternative embodiment, the variable rate data may comprise variable rate non-voice data. The non-voice data could be transmitted at a maximum rate as determined at the initiation of the transmission. During transmission, data could be transmitted at the maximum rate and at several sub-rates analogous to the various rates used for voice data. A similar rate determination process would be used to determine the rate or sub-rate of the transmitted non-voice data.

Modulator 18 includes circuitry (not shown) which adds cyclic redundancy check (CRC) bits to full and half-rate frames and tail bits to all rate frames (not shown) to vocoder data bits 20. Modulator 18 preferably includes an encoder (not shown) which convolutionally encodes each frame of data (not shown) to produce frames of symbol data. In the forward link the convolutional encoding is preferably rate one-half, and in the reverse link the convolutional encoding is preferably rate one-third.

Each frame of symbol data is interleaved by an interleaver (not shown), preferably on a bit level basis, to increase time diversity for purposes of error correction For those frames corresponding to a data rate less than the highest data rate, e.g. 9,600 bps, modulator 18 repeats symbol data to maintain a constant symbol rate for the frame. In other words, if the rate selected by vocoder 14 is less than that which corresponds to a 9,600 bps frame rate, modulator 18 repeats the symbols to fill the frame with the number of repeats dependent upon the data rate. For a frame corresponding to a 9,600 bps data rate, all symbols are provided by modulator 18 in an interleaved data frame. However for a frame corresponding to a 4,800 bps data rate, modulator 18 provides the symbols twice in an interleaved data frame. Similarly for frames corresponding to 2,400 bps and 1,200 bps data rates, modulator 18 respectively provides the symbols four times and eight times into an interleaved data frame. Thus in this exemplary embodiment, a frame of symbol data consists of 384 symbols for forward link communication (rate one-half coding) for a symbol frame rate of 19,200 symbols per second (sps).

The frames of symbol data are bi-phase shift key (BPSK) modulated with orthogonal covering of each BPSK symbol along with quadrature phase shift key (QPSK) spreading of the covered symbols as disclosed in U.S. Patent No. 5,103,459. On the forward link, modulator 18 transmits the frame as a continuous stream of modulated symbol data 22 with the power of each transmitted frame reduced according to the symbol repetition in the frame.

On the reverse link, modulator 18 uses orthogonal signalling techniques along with QPSK spreading and BPSK modulation as disclosed in US. Patent No. 5,103,459. Modulator 18 also includes a data burst randomizer (not shown), which transmits the frame in bursts of symbol data 22. Further details on the data burst randomizer are described in Taiwan Patent NI-072304 issued 15 November, 1995, entitled "DATA BURST RANDOMIZER." Using the data burst randomizer, non-full rate data is sent in gated time segments. The ratio of the data burst segments to the total time is proportional to the data rate. Thus in the exemplary embodiment, a frame of full rate data consists of 576 symbols (rate one-third coding) for a symbol frame rate of 28,800 sps; a frame of half rate data consists of 288 symbols at a symbol frame rate of 28,800 sps transmitted with a 50% duty cycle; a frame of quarter rate data consist of 144 symbols at a symbol frame rate of 28,800 sps transmitted with a 25% duty cycle; a frame of eighth rate data consists of 72 symbols at a symbol frame rate of 28,800 sps transmitted with 125% duty cycle.

Receiver 12 comprises a demodulator 26 for demodulating and deinterleaving received symbol data 24. Demodulator 26 provides symbol data 28 to decoder 30, which includes the rate-determination system of the present invention. Demodulation symbols data 28 is "soft decision data" because it is the actual values of the I and Q components of the received symbol data 24 which is comprised of the transmitted symbol data 22 and the interferences rather than being the binary representation of a decision on the most likely transmitted symbol.

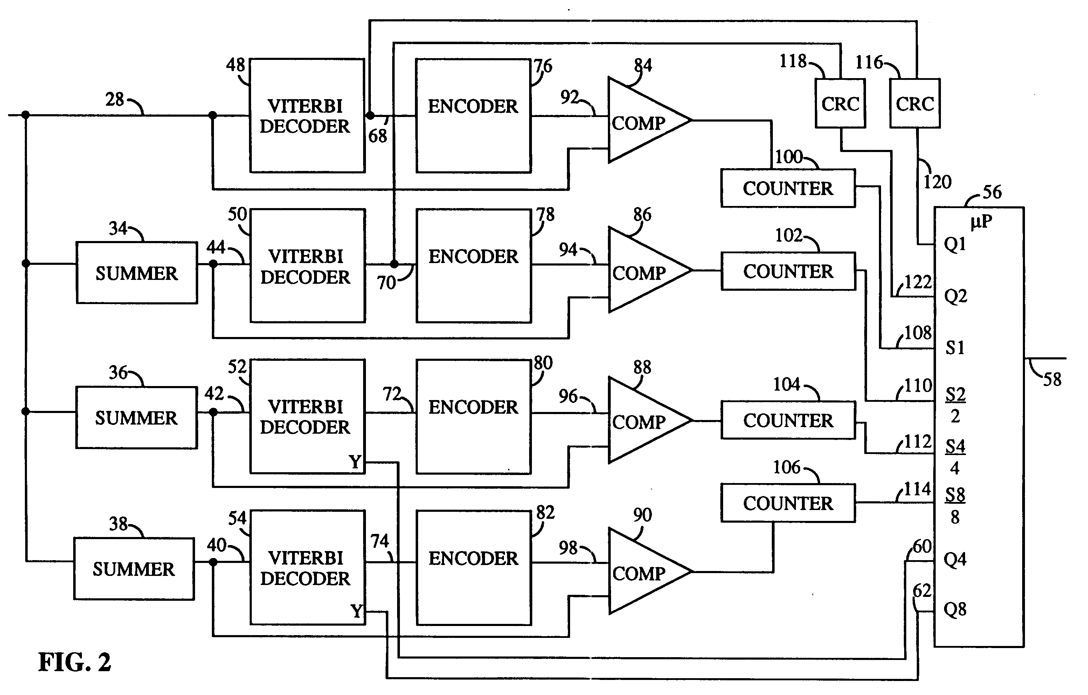

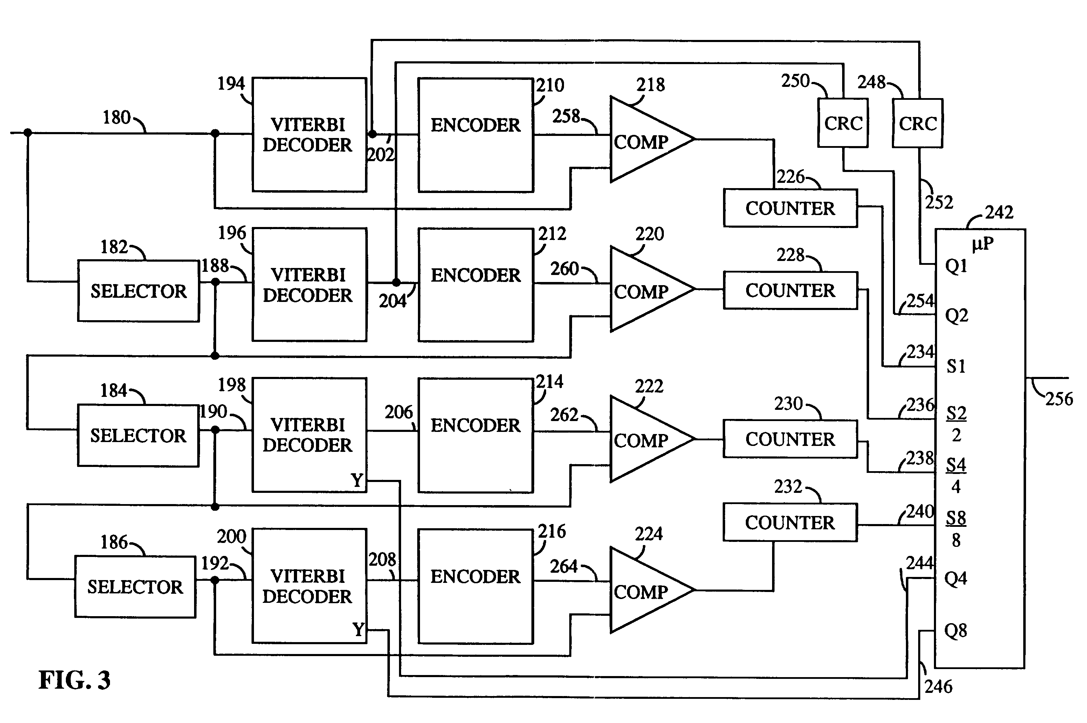

The apparatus shown in Figure 2 determines the rate at which data is encoded for a forward link transmission. The apparatus as illustrated in Figure 2 and in Figure 3 subsequently introduced is shown as having multiple parallel paths for data processing for ease in understanding of the invention. However, it should be understood that only a single path is preferred with a sharing of circuit elements so as to reduce the circuit element count. In this shared element arrangement, the demodulated symbol data is stored in a buffer (not shown) as received and provided to the path for repeated processing of the data for each of the possible data rates. The decoded output for each data rate is also stored until the rate determination has been made. The stored decoded output corresponding to the selected data rate is then passed to subsequent stages for further processing. In the present invention the parameters and data generated by this decoder are used to determine the frame rate of the transmitted data from each of the possible frame rates.

In Figure 2, demodulated symbol data 28 is provided to each of summers 34, 36, and 38. As mentioned before, for the forward link transmitted frames, symbols are repeated for lower rate frames to achieve a constant number of symbols in a frame as transmitted. In order to provide an increase in quality, at the receiver the repeated symbols are summed and scaled to provide for each set of repeated symbols a combined symbol representative of the original symbol before repetition on the transmit end. Summer 38 sums every 8 symbols and provides a scaled sum symbol data 40. Summer 36 sums every 4 symbols and provides a scaled sum symbol data 42. Summer 34 sums every 2 symbols and provides scaled sum symbol data 44. Thus, summers 34, 36, and 38 correspond to half-rate data through eighth-rate data, respectively.

Each of four Viterbi decoders 48, 50, 52, and 54 decode symbol data 28 and convolutionally-encoded scaled sum symbol data 44, 42, and 40, respectively to provide corresponding bit data. Viterbi decoders 52 and 54 include means for producing Yamamoto Quality Metrics 60 and 62, respectively, which are provided to microprocessor 56 as Q4 and Q8 respectively. Yamamoto Quality Metrics 60 and 62 are each typically represented by a one bit value for each frame. A Yamamoto Quality Metric is a well known indicator of data quality. In other embodiments, Viterbi decoders 48 and 50 may produce Yamamoto Quality Metrics, as well. However since other more precise quality indicators are present in the higher rate data, the use of the Yamamoto Quality Metrics is generally not necessary. In other embodiments, Yamamoto Quality Metrics 60 and 62 may be produced by circuitry external to Viterbi decoders 52 and 54.

As mentioned previously, each of Viterbi decoders 48 - 54 produce decoded symbol data or bit data 68, 70, 72, and 74, respectively. Encoders 76,78,80, and 82 re-encode the decoded symbol data 68-74, respectively. Comparators 84, 86, 88, and 90 compare re-encoded bit data 92, 94, 96, and 98 to demodulated symbol data 28, scaled sum symbol data 44, 42, and 40, respectively. Counters 100, 102, 104, and 106 count the number of symbols that do not match. Counters 100 - 106 produce Symbol Error Rates 108, 110, 112, and 114, respectively, which are each represented by an eight bit value. Symbol Error Rates 108 - 114 represent the number of mismatches in a frame and are provided to microprocessor 56 as S1, $\frac{S2}{2}$, $\frac{S4}{4}$ and $\frac{S8}{8}$ respectively.

Cyclic redundancy check (CRC) circuits 116 and 118 check the CRC bits of decoded symbol data (bit data) 68 and 70, respectively. CRC circuits 116 and 118 provide CRC results 120 and 122, respectively, to microprocessor 56 as Q1 and Q2 respectively. In other embodiments, circuits may be provided to check the CRC bits of decoded symbol data (bit data) 72 and 74 as well if so provided. In the exemplary embodiment disclosed herein, and in the copending patent applications and U.S. Patent No. 5,103,459, CRC results 120 and 122 are each typically represented by a one bit value.

In the reverse link, decoder 30 comprises the apparatus shown in Figure 3. Soft-decision symbol data 180 comprises time-gated bursts of symbols (not shown). Modulator 18 pseudorandomly masks out the redundant symbols in frames transmitted at less than full-rate using a process described in above-referenced U.S Patent No. 5,103,459, and further described in (above referenced Taiwan Patent NI-072304.). Again in Figure 3, as in Figure 2, the apparatus is illustrated as having multiple parallel paths for data processing for ease in understanding. However it should be understood that a single path is preferred using shared circuit elements. In the shared element arrangement the demodulated data is stored in a buffer (not shown) as received and provided to the path for repeated processing of the frame for each of the possible data rates. In Figure 3, selector 182 receives symbol data 180 and extracts one-half the symbols to produce selected symbol data 188; selector 184 receives selected symbol data 188 and extracts one-half the symbols to produce selected symbol data 190; and selector 186 receives selected symbol data 190 and extracts one-half the symbols to produce selected symbol data 192. As mentioned in conjunction with the reverse link, symbols are repeated to achieve a constant number of symbols in the frame. However upon transmission only one set of each different repeated symbols sets are actually transmitted. On the receiver end the received symbols are treated as being symbol sets for the various possible rates. Viterbi decoder 194 receives symbol data 180; Viterbi decoder 196 receives selected symbol data 188; Viterbi decoder 198 receives selected symbol data 190; and Viterbi decoder 200 receives selected symbol data 192. Thus, Viterbi decoders 194-200 correspond to data encoded at full-rate through eighth-rate, respectively. Viterbi decoders 194, 196, 198, and 200 produce decoded symbol data or bit data 202, 204, 206, and 208, respectively. As in the forward link, each of Viterbi decoders 194 - 200 is most likely to produce decoded symbol data 202 - 208, respectively, having the least errors when the data is encoded at the rate to which it corresponds.

Encoders 210, 212, 214, and 216 re-encode decoded symbol data 202 - 208, respectively. Comparators 218, 220, 222, and 224 compare re-encoded symbol data 258, 260, 262, and 264, respectively, to symbol data 180, and selected symbol data 188, 190, and 192, respectively. Counters 226, 228, 230, and 232 count the number of symbols that do not match. Counters 226 - 232 produce Symbol Error Rates 234, 236, 238, and 240, respectively, which are each represented by an eight bit value. Symbol Error Rates 234, 236, 238, and 240 represent the number of mismatches in a frame and are provided to microprocessor 242 as S1, $\frac{S2}{2}$, $\frac{S4}{4}$, and $\frac{S8}{8}$, respectively.

Viterbi decoders 198 and 200 also produce Yamamoto Quality Metrics 244 and 246, respectively, which are provided to microprocessor 242 as Q4 and Q8 respectively. In other embodiments, Yamamoto Quality Metrics 244 and 246 may be produced by circuitry external to Viterbi decoders 198 and 200. As discussed previously the Yamamoto Quality Metrics are represented by a single bit value.

Cyclic redundancy check (CRC) circuits 248 and 250 check the CRC bits of decoded symbol data 202 and 204, respectively. CRC circuits 248 and 250 provide CRC results 252 and 254, respectively, to microprocessor 242 as Q1 and Q2, respectively. In other embodiments, circuits may be provided to check the CRC bits of decoded symbol data 206 and 208, as well. CRC results 252 and 254 are each typically represented by a one bit value.

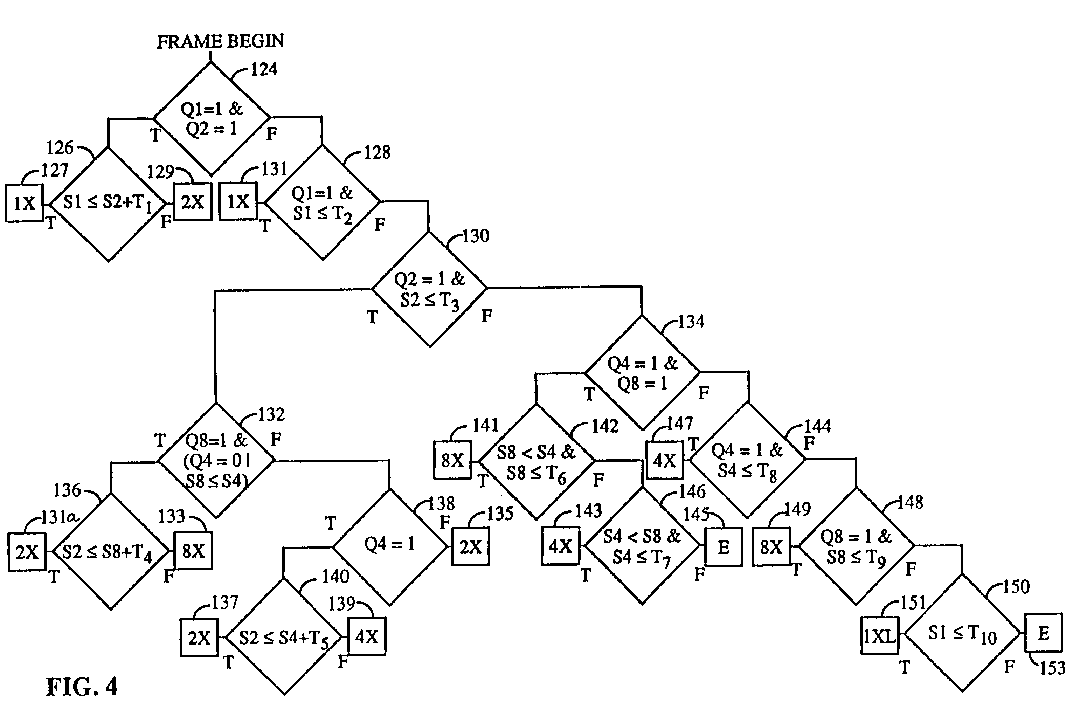

Microprocessors 56 and 242 use a process illustrated by the binary decision tree shown in Figure 4 to determine the rate at which data is encoded in a forward link and reverse link transmission, respectively. The reverse link rate determination process is the same as the forward link rate determination process with the exception of some of the threshold values in the expressions. The threshold values in the process are a function of the link and can be modified for different environments. Table 1 gives a set of value for the ten thresholds of Figure 4. The inputs to the process are collectively known as "error metrics" and comprise CRC results Q1 and Q2, Yamamoto Quality Metrics Q4 and Q8, and Symbol Error Rates S1, $\frac{S2}{2}$, $\frac{S4}{4}$ and $\frac{S8}{8}$ which correspond to microprocessor inputs from either Figure 2 or Figure 3.

The values for $T_1$-$T_{10}$ as expressed in Table I are based on the number of symbols per frame. The number of symbols per frame is 384 symbols/frame for the forward link communication, encoded at rate one-half, and 576 symbols/ frame for reverse link communication, encoded at rate one-third, as stated above. On the reverse link, due to the rate one-third encoding, the encoder produces three symbols of output for each data bit of input. The entries in Table I reflect a "short cut" in the error comparison process on the reverse link. Instead of comparing each of the three symbols output from the encoder to the originally received symbols, the comparator only compares two of the three symbols. This process reduces the required parallel circuitry while yielding the same average results as comparing all three symbols. Therefore the entries given in Table I reflect the comparison of 384 symbols/frame (equal to the two-thirds of the actual 576 symbols received each frame) and a corresponding scaling in the S1, S2, S4, and S8 values. The most general expression for the empirical results of Table I are given in the columns labeled Forward Link % and Reverse Link % which gave $T_1$ - $T_{10}$ as a percentage of the number of symbols in a frame.

Table I

| Threshold | Forward Link | Reverse Link | Forward Link % | Reverse Link % |
|-----------|--------------|--------------|----------------|----------------|
| $T_1$ | 15 | 15 | 3.9% | 3.9% |
| $T_2$ | 77 | 110 | 20.1% | 28.6% |
| $T_3$ | 60 | 84 | 15.6% | 21.9% |
| $T_4$ | 10 | 10 | 2.6% | 2.6% |
| $T_5$ | 10 | 10 | 2.6% | 2.6% |
| $T_6$ | 64 | 96 | 16.7% | 25% |
| $T_7$ | 60 | 76 | 15.6% | 19.8% |
| $T_8$ | 60 | 76 | 15.6% | 19.8% |
| $T_9$ | 64 | 96 | 16.7% | 25% |
| $T_{10}$ | 71 | 78 | 18.5% | 20.3% |

With regard to Table I, it should be noted that the expressions in both the forward link process and the reverse link process shown in Figure 4 reflect the results of empirical studies primarily on voice data for the particular frame and modulation numerology disclosed herein and in the copending patent applications previously identified and U.S. Patent No. 5,103,459. Other expressions may provide better results when non-voice data, such as facsimile data, is transmitted or when the system is operating over a different environment, such as indoor environments. Accordingly, other values may be readily used in the Symbol Error Rate comparisons, for comparison levels and added constant values.

The process described with reference to Figure 4 is executed once for each frame. To normalize the input to the decision process, the S values for the non-full rate data processes are multiplied times the inverse of the data rate. In this case $S2 = 2 \chi \frac{S2}{2}$, $S4 = 4\chi \frac{S4}{4}$, $S8 = 8\chi \frac{S8}{8}$. Upon beginning the process for the frame if the expression at node 124 is true, then the microprocessor proceeds to node 126; if false, then the microprocessor proceeds to node 128. At node 124, the expression "Q1=1 & Q2=1" signifies that CRC result Q1 is equal to one and CRC result Q2 is equal to one. In this embodiment, CRC values of one (1) and zero (0) respectively represent that the CRC for the received frame of data was correct and incorrect respectively. Throughout the tree, the symbol "&" denotes a Boolean AND operator, the symbol "I" denotes a Boolean OR operator, and the symbols "=" and "≤" both denote relational operators.

At node 126, the expression "S1≤S2+$T_1$" signifies that Symbol Error Rate S1 is less than or equal to Symbol Error Rate S2 plus a threshold value $T_1$ which is equal to 15 for both the forward and reverse links according to Table I. If the expression at node 126 is true, then the microprocessor determines that the rate is full-rate at output 127 and provides a corresponding frame rate indication; if false, then the microprocessor determines that the rate is half-rate at output 129 and provides a corresponding frame rate indication.

At node 128, the expression "Q1=1 & S1≤$T_2$" signifies that CRC result Q1 is equal to one and Symbol Error Rate S1 is less than or equal to a symbol error rate of $T_2$ which is equal to 77 for the forward link and equal to 110 for the reverse link. If the expression at node 128 is true, then the microprocessor determines that the rate is full-rate at output 131 and provides a corresponding frame rate; if false, then the microprocessor proceeds to node 130.

At node 130, the expression "Q2=1 & S2≤$T_3$" signifies that CRC result Q2 equals one and Symbol Error Rate S2 is less than or equal to a symbol error rate of $T_3$. If the expression at node 130 is true, the microprocessor proceeds to node 132; if false, then the microprocessor proceeds to node 134.

At node 132, the expression "Q8=1 & (Q4=0 I S8≤S4)" signifies that Yamamoto Quality Metric Q8 is equal to one and the expression signifying that Yamamoto Quality Metric Q4 is equal to zero or Symbol Error Rate S8 is less than or equal to Symbol Error Rate S4 is true. Again for this embodiment, Yamamoto Quality Metric values of one (1) and zero (0) respectively indicate a high or low probability of correct decoding of the symbol data by the Viterbi decoder.

If the expression at node 132 is true, then the microprocessor proceeds to node 136; if false, the microprocessor proceeds to node 138. At node 136, the expression "S2≤S8+$T_4$" signifies that Symbol Error Rate S2 is less than or equal to Symbol Error Rate S8 plus $T_4$. If the expression at node 136 is true, then the microprocessor determines that the rate is half-rate at output 131a and provides a corresponding frame rate indication; if false, then the microprocessor determines that the rate is eight-rate at output 133 and provides a corresponding frame rate indication.

At node 138, the expression "Q4=1" signifies that Yamamoto Quality Metric Q4 is equal to one. If the expression at node 138 is true, then the microprocessor proceeds to node 140; if false, then the microprocessor determines that the rate is half-rate at output 135 and provides a corresponding frame rate indication. At node 140, the expression "S2≤S4+$T_5$" signifies that Symbol Error Rate S2 is less than or equal to Symbol Error Rate S4 plus $T_5$. If the expression at node 140 is true, then the microprocessor determines that the rate is half-rate at output 137 and provides a corresponding frame rate indication; if false, then the microprocessor determines that the rate is quarter-rate at output 139 and provides a corresponding frame rate indication.

At node 134, the expression "Q4=1 & Q8=1" signifies that Yamamoto Quality Metric Q4 equals one and Yamamoto Quality Metric Q8 equals one. If the expression at node 134 is true, then the microprocessor proceeds to node 142; if false, then the microprocessor proceeds to node 144. At node 142, the expression "S8<S4 & S8≤$T_6$" signifies that Symbol Error Rate S8 is less than Symbol Error Rate S4 and Symbol Error Rate S8 is less than or equal to a symbol error rate of $T_6$. If the expression at node 142 is true, then the microprocessor determines that the rate is eighth-rate at output 141 and provides a corresponding frame rate indication; if false, then the microprocessor proceeds to node 146. At node 146, the expression "S4<S8 & S4≤$T_7$" signifies that Symbol Error Rate S4 is less than Symbol Error Rate S8 and Symbol Error Rate S4 is less than or equal to a symbol error rate of $T_7$. If the expression at node 146 is true, then the microprocessor determines that the rate is quarter-rate at output 143 and provides a corresponding frame rate indication; if false, then the microprocessor cannot determine the rate and provides an "erasure" indication at output 145. Because the receiver vocoder (not shown) cannot decode a frame unless the microprocessor provides it with the rate, the receiver vocoder ignores the current frame and interpolates the voice data between the previous frame and the next frame in response to the erasure indication

At node 144, the expression "Q4=1 & S4≤$T_8$" signifies that Yamamoto Quality Metric Q4 equals one and Symbol Error Rate S4 is less than or equal to a symbol error rate of $T_8$. If the expression at node 144 is true, then the microprocessor determines that the rate is quarter-rate at output 147 and provides a corresponding frame rate indication; if false, then the microprocessor proceeds to node 148. At node 148, the expression "Q8=1 & S8≤$T_9$" signifies that Yamamoto Quality Metric Q8 equals one and Symbol Error Rate S8 is less than or equal to a symbol error rate of $T_9$. If the expression at node 148 is true, then the microprocessor determines that the rate is eighth-rate at output 149 and provides a corresponding frame rate indication; if false, then the microprocessor proceeds to node 150. At node 150, the expression "S1≤$T_{10}$" signifies that Symbol Error Rate S1 is less than or equal to a symbol error rate of $T_{10}$. If the expression at node 150 is true, then the microprocessor determines that the rate is likely to be full-rate but the frame is likely to contain bit errors. Therefore, the microprocessor provides a "full-rate likely" frame rate indication at output 151. If the expression at node 150 is false, then the microprocessor provides an erasure indication at output 153.

As mentioned previously, on occasion less than full-rate frame vocoder data may be transmitted along with non-voice data in a 9,600 bps transmission frame. Although the microprocessor will determine that the frame is a full-rate frame, it will inspect the mode bit to determine if in fact the frame is comprised of full-rate vocoder data. If the mode bit indicates that the frame is comprised of full-rate vocoder data then this indication is provided to the vocoder. However, should the mode bit indicate that the frame is comprised of a mixture of vocoder data and non-voice data, or all non-voice data, then a further inspection of the additional overhead bits transmitted in type of frame is undertaken. From these additional overhead bits the rate of the vocoder data, if present, is indicated. In those cases where vocoder data is present in this type of frame, the microprocessor provides to the receiver vocoder the indicated frame rate of the vocoder data rather than that determined from the received transmission frame. In the case where the received transmission frame is comprised of all non-voice data, and so indicated by the overhead bits, the microprocessor provides a blank indication to the receiver vocoder.

**Claims**

1. A method for determining a data rate of a received signal in a receiver of a variable-rate communication system comprising the steps of:

  decoding and re-encoding at a first data rate said received signal to produce a first received signal prediction and to produce a first quality indication;

  comparing said first received signal prediction to said received signal and counting a first number of errors, wherein an error occurs when said received signal does not match said first received signal prediction, and wherein said first number of errors and said first quality indication define a first error metric;

reducing said received signal to produce a second received signal representing a second data rate;

decoding and re-encoding at said second data rate said second received signal to produce a second received signal prediction and to produce a second quality indication;

comparing said second received signal prediction to said second received signal and counting a second number of errors, wherein an error occurs when said second received signal does not match said second received signal prediction, and wherein said second number of errors and said second quality indication define a second error metric; and

predicting said data rate of said received signal based on a comparison of each of said error metrics.

2. The method of Claim 1 further comprising the steps of:

reducing said received signal to produce a third received signal representing a third data rate;

decoding and re-encoding at said third data rate said third received signal to produce a third received signal prediction and to produce a third quality indication; and

comparing said third received signal prediction to said third received signal and counting a third number of errors, wherein an error occurs when said third received signal does not match said third received signal prediction, and wherein said third number of errors and said third quality indication define a third error metric.

3. The method of Claim 2 further comprising the steps of:

reducing said received signal to produce a fourth received signal representing a fourth data rate;

decoding and re-encoding at said fourth data rate said fourth received signal to produce a fourth received signal prediction and to produce a fourth quality indication; and

comparing said fourth received signal prediction to said fourth received signal and counting a fourth number of errors, wherein an error occurs when said fourth received signal does not match said fourth received signal prediction, and wherein said fourth number of errors and said fourth quality indication define a fourth error metric.

4. The method of Claim 3 wherein:

said first data rate corresponds to full rate communication;
said second data rate corresponds to half rate communication;
said third data rate corresponds to quarter rate communication; and
said fourth data rate corresponds to eighth rate communication.

5. The method of Claim 4 wherein said first quality indication, said second quality indication, said third quality indication, and said fourth quality indication are each a single bit binary quality indication wherein a "1" indicates a high probability that said data rate of said received signal is the data rate corresponding to said quality indication and a "0" indicates said data rate of said received signal is not the data rate corresponding to said quality indication.

6. The method of Claim 5, wherein said step of predicting said data rate of said received signal comprises the steps of:

predicting said first data rate if (said first quality indication = 1 AND said second quality indication = 1) is true and (said first number of errors $\leq$ said second number of errors + $T_1$) is true, or if (said first quality indication = 1 AND said second quality indication = 1) is false and (said first quality indication = 1 AND said first number of errors $\leq T_2$) is true;

predicting a half-rate indication if (said first quality indication = 1 AND said second quality indication = 1) is true and (said first number of errors $\leq$ said second number of errors + $T_1$) is false, or if (said first quality indication = 1 AND said second quality indication = 1) is false and (said first quality indication = 1 AND said first number of errors $\leq T_2$) is false and (said second quality indication = 1 AND said second number of errors $\leq T_3$) is true and (said fourth quality indication = 1 AND (said third quality indication = 0 OR said fourth number of errors $\leq$ said third number of errors)) is true and (said second number of errors $\leq$ said fourth number of errors + $T_4$) is true, or if (said first quality indication = 1 AND said second quality indication = 1) is false and (said first quality indication = 1 AND said first number of errors $\leq T_2$) is false and (said second quality indication = 1 AND said second number of errors $\leq T_3$) is true and (said fourth quality indication = 1 AND (said third quality indication = 0 OR said fourth number of errors $\leq$ said third number of errors)) is false and (said third quality indication = 1) is true and (said second number of errors $\leq$ said third number of errors + $T_5$) is true, or if (said first quality indication = 1 AND said second quality indication = 1) is false and (said first quality indication = 1 AND said first number of errors $\leq T_2$) is false and (said second quality indication = 1 AND said second number of errors $\leq T_3$) is true and (said fourth quality indication = 1 AND (said third quality indication = 0 OR said fourth number of errors $\leq$ said third number of errors)) is false and (said third quality indication = 1) is false;

predicting a quarter-rate indication if (said first quality indication = 1 AND said second quality indication = 1) is false and (said first quality indication = 1 AND said first number of errors $\leq T_2$) is false and (said second quality indication = 1 AND said second number of errors $\leq T_3$) is true and (said fourth quality indication = 1 AND (said third quality indication = 0 OR said fourth number of errors $\leq$ said third number of errors)) is false and (said third quality indication = 1) is true and (said second number of errors $\leq$ said third number of errors + $T_5$) is false, or if (said first quality indication = 1 AND said second quality indication = 1) is false and (said first quality indication = 1 AND said first number of errors $\leq T_2$) is false and (said second quality indication = 1 AND said second number of errors $\leq T_3$) is false and (said third quality indication = 1 AND said fourth quality indication = 1) is true and (said fourth number of errors < said third number of errors AND said fourth number of errors $\leq T_6$) is false and (said third number of errors < said fourth number of errors AND said third number of errors $\leq T_7$) is true, or if (said first quality indication = 1 AND said second quality indication = 1) is false and (said first quality indication = 1 AND said first number of errors $\leq T_2$) is false and (said second quality indication = 1 AND said second number of errors $\leq T_3$) is false and (said third quality indication = 1 AND said fourth quality indication = 1) is false and (said third quality indication = 1 AND said third number of errors $\leq T_8$) is true; and

predicting an eighth-rate indication if (said first quality indication = 1 AND said second quality indication = 1) is false and (said first quality indication = 1 AND said first number of errors $\leq T_2$) is false and (said second quality indication = 1 AND said second number of errors $\leq T_3$) is true and (said fourth quality indication = 1 AND (said third quality indication = 0 OR said fourth number of errors $\leq$ said third number of errors)) is true and (said second number of errors $\leq$ said fourth number of errors + $T_4$) is false, or if (said first quality indication = 1 AND said second quality indication = 1) is false and (said first quality indication = 1 AND said first number of errors $\leq T_2$) is false and (said second quality indication = 1 AND said second number of errors $\leq T_3$) is false and (said third quality indication = 1 AND said fourth quality indication = 1) is true and (said fourth number of errors < said third number of errors AND said fourth number of errors $\leq T_6$) is true, or if (said first quality indication = 1 AND said second quality indication = 1) is false and (said first quality indication = 1 AND said first number of errors $\leq T_2$) is false and (said second quality indication = 1 AND said second number of errors $\leq T_3$) is false and (said third quality indication = 1 AND said fourth quality indication = 1) is false and (said third quality indication = 1 AND said third number of errors $\leq T_8$) is false and (said fourth quality indication = 1 AND said fourth number of errors $\leq T_9$) is true;

wherein $T_1$, $T_2$, $T_3$, $T_4$, $T_5$, $T_6$, $T_7$, $T_8$ and $T_9$ are fixed constants.

7. The method of Claim 6 wherein $T_{10}$ is a fixed constant, further comprising the step of:

producing an unrecoverable error indication if (said first quality indication = 1 AND said second quality indication=1) is false and (said first quality indication = 1 AND said first number of errors $\leq T_2$) is false and (said second quality indication = 1 AND said second number of errors $\leq T_3$) is false and (said third quality indication = 1 AND said fourth quality indication = 1) is true and (said fourth number of errors < said third number of errors AND said fourth number of errors $\leq T_6$) is false and (said third number of errors < said fourth number of errors AND said third number of errors $\leq T_7$) is false, or if (said first quality indication = 1 AND said second quality indication = 1) is false and (said first quality indication = 1 AND said first number of errors $\leq T_2$) is false and (said second quality indication = 1 AND said second number of errors $\leq T_3$) is false and (said third quality indication = 1 AND said fourth quality indication = 1) is false and (said third quality indication = 1 AND said third number of errors $\leq T_8$) is false and (said fourth quality indication = 1 AND said fourth number of errors $\leq T_9$) is false and (said first number of errors $\leq T_{10}$)

is false.

8. The method of Claim 7, further comprising the step of:

producing a full-rate-with-bit-errors indication if (said first quality indication = 1 AND said second quality indication = 1) is false and (said first quality indication = 1 AND said first number of errors $\leq T_2$) is false and (said second quality indication = 1 AND said second number of errors $\leq T_3$) is false and (said third quality indication = 1 AND said fourth quality indication =1) is false and (said third quality indication = 1 AND said third number of errors $\leq T_8$) is false and (said fourth quality indication = 1 AND said fourth number of errors $\leq T_9$) is false and (said first number of errors $\leq T_{10}$) is true.

9. The method of Claim 6 or 8 wherein said full rate communication is 9,600 bits per second.

10. The method of Claim 8 wherein:

$T_1$ has a value equal to 15;
$T_2$ has a value equal to 77;
$T_3$ has a value equal to 60;
$T_4$ has a value equal to 10;
$T_5$ has a value equal to 10;
$T_6$ has a value equal to 64;
$T_7$ has a value equal to 60;
$T_8$ has a value equal to 60;
$T_9$ has a value equal to 64; and
$T_{10}$ has a value equal to 71.

11. The method of Claim 8 wherein:

$T_1$ has a value equal to 15;
$T_2$ has a value equal to 110;
$T_3$ has a value equal to 84;
$T_4$ has a value equal to 10;
$T_5$ has a value equal to 10;
$T_6$ has a value equal to 96;
$T_7$ has a value equal to 76;
$T_8$ has a value equal to 76;
$T_9$ has a value equal to 96; and
$T_{10}$ has a value equal to 78.

12. The method of Claim 8 wherein:

$T_1$ is about 4% of the number of symbols in a frame;
$T_2$ is about 20% of the number of symbols in a frame;
$T_3$ is about 16% of the number of symbols in a frame;
$T_4$ is about 3% of the number of symbols in a frame;
$T_5$ is about 3% of the number of symbols in a frame;
$T_6$ is about 17% of the number of symbols in a frame;
$T_7$ is about 16% of the number of symbols in a frame;
$T_8$ is about 16% of the number of symbols in a frame;
$T_9$ is about 17% of the number of symbols in a frame; and
$T_{10}$ is about 19% of the number of symbols in a frame.

13. The method of Claim 8 wherein:

$T_1$ is about 4% of the number of symbols in a frame;
$T_2$ is about 29% of the number of symbols in a frame;
$T_3$ is about 22% of the number of symbols in a frame;
$T_4$ is about 3% of the number of symbols in a frame;
$T_5$ is about 3% of the number of symbols in a frame;

$T_6$ is about 25% of the number of symbols in a frame;

$T_7$ is about 20% of the number of symbols in a frame;

$T_8$ is about 20% of the number of symbols in a frame;

$T_9$ is about 25% of the number of symbols in a frame; and

$T_{10}$ is about 20% of the number of symbols in a frame.

14. The method of Claim 1 wherein said step of reducing comprises the steps of:

dividing in time said received signal to produce an early received signal and a late received signal; and

summing said early received signal and said late received signal to produce said second received signal.

15. The method of Claim 1 wherein said received signal is divided in time into a set of segments and wherein said step of reducing comprises the step of selecting a subset of said set of segments of said received signal to produce said second received signal.

16. The method of Claim 2 wherein said step of reducing to produce said third signal comprises the steps of:

dividing in time said second received signal to produce an early second received signal and a late second received signal; and

summing said early second received signal and said late second received signal to produce said third received signal.

17. The method of Claim 2 wherein said second received signal is divided in time into a set of segments and wherein said step of reducing to produce said third signal comprises the step of selecting a subset of said set of segments of said second received signal to produce said third received signal.

18. The method of Claim 1 wherein said first quality indication is a Cyclic Redundancy Check result.

19. The method of Claim 2 or 3 wherein said first quality indication, said second quality indication, and said third quality indication are each a single bit quality indication wherein a "1" indicates a high probability of successful decoding at said data rate corresponding to said quality indication and a "0" indicates a high probability of defective decoding at said data rate corresponding to said quality indication.

20. The method of Claim 19 wherein said step of predicting comprises the step of predicting a first predicted data rate if said first quality indication is equal to "1" and if said first number of errors is less than a threshold number.

21. The method of Claim 19 wherein said step of predicting comprises the step of predicting said first data rate if said first quality indication is equal to "1" and said second quality indication is equal to "1" and if said first number of errors is less than or equal to said second number of errors plus a predetermined number.

22. The method of Claim 19 wherein said first data rate is 14,400 bits per second.

23. A method according to Claim 1 comprising the steps of:

selecting a first data rate if said quality indication corresponding to said first data rate indicates successful decoding at said first data rate and if said number of errors corresponding to said first data rate is less than a first threshold; and

selecting a second data rate if said quality indication corresponding to said first data rate indicates successful decoding and said quality indication corresponding to said second data rate indicates successful decoding and if said number of errors corresponding to said first data rate exceeds a second threshold .

24. A method according to Claim 23 wherein said first threshold is a predetermined constant.

25. A method according to Claim 23 wherein said first threshold is a predetermined constant plus said number of errors corresponding to said second data rate.

26. A method according to Claim 23 wherein said first threshold and said second threshold are equal and are a predetermined constant plus said number of errors corresponding to said second data rate.

27. A method according to Claim 3 comprising the step of:
selecting said second data rate if said quality indication corresponding to said first data rate indicates unsuccessful decoding at said first data rate and if said quality indication corresponding to said second data rate indicates successful decoding at said second data rate and if said quality indication corresponding to a third data rate indicates unsuccessful decoding at said third data rate and if said quality indication corresponding to a fourth data rate indicates successful decoding at said fourth data rate and said number of errors corresponding to said second data rate is less than or equal to a third threshold.

28. A method according to Claim 27 wherein said third threshold is a predetermined constant plus said number of errors corresponding to said fourth data rate.

29. A method according to Claim 27 further comprising the step of:
selecting a fourth data rate if said quality indication corresponding to said first data rate indicates unsuccessful decoding at said first data rate and if said quality indication corresponding to said second data rate indicates successful decoding at said second data rate and if said quality indication corresponding to a third data rate indicates unsuccessful decoding at said third data rate and if said quality indication corresponding to a fourth data rate indicates successful decoding at said fourth data rate and said number of errors corresponding to said second data rate exceeds a third threshold.

30. A method according to Claim 29 wherein said third threshold is a predetermined constant plus said number of errors corresponding to said fourth data rate.

31. A method according to Claim 27 comprising the step of:
selecting said second data rate if said quality indication corresponding to said first data rate indicates unsuccessful decoding at said first data rate and if said quality indication corresponding to said second data rate indicates successful decoding at said second data rate and if said quality indication corresponding to a third data rate indicates unsuccessful decoding at said third data rate and if said quality indication corresponding to said fourth data rate indicates unsuccessful decoding at said fourth data rate.

32. A method according to Claim 27 comprising the steps of:
selecting said second data rate if said quality indication corresponding to said first data rate indicates unsuccessful decoding at said first data rate and if said quality indication corresponding to said second data rate indicates successful decoding at said second data rate and if said quality indication corresponding to a third data rate indicates successful decoding at said third data rate and if said quality indication corresponding to a fourth data rate indicates successful decoding at said fourth data rate and said number of errors corresponding to said second data rate is less than or equal to said number of errors corresponding to said third data rate plus a fixed constant.

33. A method according to Claim 27 comprising the step of:
selecting said third data rate if said quality indication corresponding to said first data rate indicates unsuccessful decoding at said first data rate and if said quality indication corresponding to said second data rate indicates successful decoding at said second data rate and if said quality indication corresponding to a third data rate indicates successful decoding at said third data rate and if said quality indication corresponding to a fourth data rate indicates successful decoding at said fourth data rate and said number of errors corresponding to said second data rate exceeds said number of errors corresponding to said third data rate plus a fixed constant.

34. A method according to Claim 27 comprising the step of:
selecting a fourth data rate if said quality indication corresponding to said first data rate indicates unsuccessful decoding at said first data rate and if said quality indication corresponding to said second data rate indicates unsuccessful decoding at said second data rate and if said quality indication corresponding to said third data rate indicates unsuccessful decoding at said third data rate and if said quality indication corresponding to said fourth data rate indicates successful decoding at said fourth data rate and said number of errors corresponding to said fourth data rate is less than or equal to a third predetermined threshold.

35. A method according to any one of the preceding claims in which said step or steps of decoding and/or re-encoding comprises Viterbi decoding and/or re-encoding.

36. A method for decoding a received signal at an unknown data rate comprising the steps of:

    determining a data rate according to the method of any one of the preceding claims;

    using the decoded received signal corresponding to said determined data rate as the bases of further processing.

37. An apparatus for estimating a data rate of a signal received from a transmitter capable of transmitting data at a plurality of data rates comprising:

    a first decoder (48) having an input coupled to said signal and having a decoded signal output and a quality indication output and a second decoder (50) having an input coupled to said signal and having a decoded signal output and a quality indication output;

    a first encoder (76) having an input coupled to said decoded signal output of said first decoder (48) and having an output and a second encoder (78) having an input coupled to said decoded signal output of said second decoder (50) and having an output;

    a first comparator (84) having a first input coupled to said output of said first encoder (76) and having a second input coupled to said signal and having an output and a second comparator (86) having a first input coupled to said output of said second encoder (78) and having a second input coupled to said signal and having an output;

    a first counter (100) having an input coupled to said output of said first comparator (84) and having an output and a second counter (102) having an input coupled to said output of said second comparator (86) and having an output; and

    a processor (56) having a plurality of inputs and an output, wherein a first input is coupled to said output of said first counter (100), a second input is coupled to said output of said second counter (102), a third input is coupled to said quality indication output of said first decoder (48), and a fourth input is coupled to said quality indication output of said second decoder (50);

    wherein said output of said processor (56) estimates said data rate of said signal.

38. An apparatus (12) for estimating a data rate of a signal received from a transmitter (10) capable of transmitting data at a plurality of data rates comprising:

    decoding means (48, 50, 52, 54) for sequentially decoding said signal at a plurality of data rates, for sequentially producing a decoded signal output corresponding to each of said plurality of data rates and for sequentially providing a quality indication output corresponding to each of said plurality of data rates;

    encoder means (76, 78, 80, 82) for sequentially encoding said decoded signal output corresponding to each of said plurality of data rates and sequentially producing an estimated received signal corresponding to each of said plurality of data rates;

    means (84,86,88,90) for sequentially comparing said signal with said estimated received signal corresponding to each of said plurality of data rates and producing an indication when said estimated received signal is in error with respect to said signal;

    means (100,102,104,106) for sequentially counting a number of said indications corresponding to each of said plurality of data rates; and

    processing means (56) for receiving said number of indications corresponding to each of said plurality of data rates and said quality indication output corresponding to each of said plurality of data rates and for estimating said data rate of said signal.

**39.** An apparatus according to Claim 37 wherein:

said first decoder is a Viterbi decoder (48);

a first quality indication generator (116) is provided having an input coupled to said output of said first Viterbi decoder (48) and having an output;

said second decoder is a Viterbi decoder (50);

a second quality indication generator (118) is provided having an input coupled to said output of said second Viterbi decoder (50) and having an output;

said third input of said processor (56) is coupled to said output of said first quality indication generator (116), and said fourth input of said processor (56) is coupled to said output of said second quality indication generator (118).

**40.** The apparatus of Claim 39 further comprising a first selector (182) interposed between said signal and said second Viterbi decoder (196).

**41.** The apparatus of Claim 39 further comprising a first summer (34) interposed between said signal and said second Viterbi decoder (50).

**42.** The apparatus of Claim 39 further comprising:

a third Viterbi decoder (52) having an input coupled to said signal and having an output;

a third quality indication generator having an input coupled to said output of said third Viterbi decoder (52) and having an output;

a third encoder (80) having an input coupled to said output of said third Viterbi decoder (52) and having an output;

a third comparator (88) having a first input coupled to said output of said third encoder (80) and having a second input coupled to said signal and having an output; and

a third counter (104) having an input coupled to said output of said third comparator (88) and having an output;

and wherein said processor (56) has a fifth input coupled to said output of said third counter (104), and a sixth input coupled to said output of said third quality indication generator.

**43.** The apparatus of Claim 42 further comprising a first selector (182) interposed between said signal and said second Viterbi decoder (196).

**44.** The apparatus of Claim 43 further comprising a second selector (184) interposed between said first selector and said third Viterbi decoder (198).

**45.** The apparatus of Claim 42 further comprising a first summer (34) interposed between said signal and said second Viterbi decoder (50).

**46.** The apparatus of Claim 45 further comprising a second summer (36) interposed between said signal and said third Viterbi decoder (52).

**47.** The apparatus of Claim 42 further comprising:

a fourth Viterbi decoder (54) having an input coupled to said signal and having an output;

a fourth quality indication generator having an input coupled to said output of said fourth Viterbi decoder (54) and having an output;

a fourth encoder (82) having an input coupled to said output of said fourth Viterbi decoder (54) and having an output;

a fourth comparator (90) having a first input coupled to said output of said fourth encoder (82) and having a second input coupled to said signal and having an output; and

a fourth counter (106) having an input coupled to said output of said fourth comparator (90) and having an output;

and wherein said processor (56) has a seventh input coupled to said output of said fourth counter (106), and an eighth input coupled to said output of said fourth quality indication generator.

**Patentansprüche**

1. Verfahren zur Bestimmung einer Datenrate eines empfangenen Signals in einem Empfänger eines Nachrichtensystems mit variabler Rate, wobei die folgenden Schritte vorgesehen sind:

Dekodieren und Wiederkodieren des empfangenen Signals mit einer ersten Datenrate zur Erzeugung einer ersten Empfangssignalvorhersage und zur Erzeugung einer ersten Qualitätsanzeige;
Vergleichen der ersten Empfangssignalvorhersage mit dem empfangenen Signal und Zählen einer ersten Anzahl von Fehlern, wobei ein Fehler dann auftritt, wenn das empfangene Signal nicht der ersten Empfangssignalvorhersage entspricht, und wobei die erste Anzahl von Fehlern und die erste Qualitätsanzeige eine erste Fehlermetrik definieren;
Reduzieren des Empfangssignals zur Erzeugung eines zweiten Empfangssignals welches eine zweite Datenrate repräsentiert;
Dekodieren und Wiederkodieren mit der zweiten Datenrate des erwähnten zweiten Empfangssignals zur Erzeugung einer zweiten Empfangssignalvorhersage und zur Erzeugung einer zweiten Qualitätsanzeige;
Vergleichen der zweiten Empfangssignalvorhersage mit dem zweiten Empfangssignal und Zählen einer zweiten Anzahl von Fehlern, wobei ein Fehler dann auftritt, wenn das erwähnte zweite Empfangssignal nicht der erwähnten zweiten Empfangssignalvorhersage entspricht, und wobei die zweite Anzahl von Fehlern und die zweite Qualitätsanzeige eine zweite Fehlermetrik definieren; und
Vorhersagen der erwähnten Datenrate des erwähnten Empfangssignals basierend auf einem Vergleich jeder der erwähnten Fehlermetriken.

2. Verfahren nach Anspruch 1, wobei ferner folgende Schritte vorgesehen sind:

Reduzieren des Empfangssignals zur Erzeugung eines dritten Empfangssignals welches eine dritte Datenrate repräsentiert;
Dekodierung und Wiederkodieren des dritten Empfangssignales bei der dritten Datenrate zur Erzeugung einer dritten Empfangssignalvorhersage und zur Erzeugung einer dritten Qualitätsanzeige; und
Vergleichen der dritten Empfangssignalvorhersage mit dem dritten Empfangssignal und Zählen einer dritten Anzahl von Fehlern, wobei ein Fehler dann auftritt, wenn das dritte Empfangssignal nicht der dritten Empfangssignalvorhersage entspricht, und wobei die erwähnte dritte Anzahl von Fehlern und die dritte Qualitätsanzeige eine dritte Fehlermetrik definieren.

3. Verfahren nach Anspruch 2, wobei die folgenden Schritte vorgesehen sind:

Reduzieren des erwähnten Empfangssignals zur Erzeugung eines vierten Empfangssignals, welches eine vierte Datenrate repräsentiert;
Dekodieren und Wiederkodieren des vierten Empfangssignals mit der erwähnten vierten Datenrate zur Erzeugung einer vierten Empfangssignalvorhersage und zur Erzeugung einer vierten Qualitätsanzeige; und
Vergleichen der vierten Empfangssignalvorhersage mit dem vierten Empfangssignal und Zählen einer vierten Anzahl von Fehlern, wobei ein Fehler dann auftritt, wenn das vierte Empfangssignal nicht der vierten Empfangssignalvorhersage entspricht, und wobei die vierte Anzahl von Fehlern und die vierte Qualitätsanzeige eine vierte Fehlermetrik definieren.

4. Verfahren nach Anspruch 3, wobei die erste Datenrate einer Vollratennachricht oder -übertragung entspricht;

wobei die zweite Datenrate einer Halbratennachricht oder -übertragung entspricht;
wobei die dritte Datenrate einer Viertelratennachricht oder -übertragung entspricht; und
wobei die vierte Datenrate einer Achtelratennachricht oder -übertragung entspricht.

5. Verfahren nach Anspruch 4, wobei die erste Qualitätsanzeige, die zweite Qualitätsanzeige, die dritte Qualitätsanzeige und die vierte Qualitätsanzeige jeweils eine Einzelbitbinärqualitätsanzeige sind, wobei "1" eine hohe Wahrscheinlichkeit anzeigt, daß die erwähnte Datenrate des Empfangssignals die Datenrate entsprechend der Qualitätsanzeige ist, und wobei "O" zeigt, daß die Datenrate des Empfangssignals nicht die Datenrate entsprechend der Qualitätsanzeige ist.

6. Verfahren nach Anspruch 5, wobei der Schritt des Vorhersagens der Datenrate des Empfangssignals folgende Schritte aufweist:

Vorhersagen der erwähnten ersten Datenrate, wenn (die erwähnte erste Qualitätsanzeige = 1 UND die erwähnte zweite Qualitätsanzeige = 1) wahr ist und (die erwähnte erste Anzahl von Fehlern ≤ der zweiten Anzahl von Fehlern + $T_1$) wahr ist, oder wenn (die erwähnte erste Qualitätsanzeige = 1 UND die erwähnte zweite Qualitätsanzeige = 1) falsch ist, und (die erwähnte erste Qualitätsanzeige = 1 UND die erste Zahl von Fehlern ≤ $T_2$) wahr ist;
Voraussagen einer Halbratenanzeige, wenn (die erwähnte erste Qualitätsanzeige = 1 UND die erwähnte zweite Qualitätsanzeige = 1) wahr ist und (die erwähnte erste Anzahl von Fehlern ≤ die erwähnte zweite Anzahl von Fehlern + $T_1$) falsch ist, oder wenn (die erwähnte erste Qualitätsanzeige = 1 UND die erwähnte zweite Qualitätsanzeige = 1) falsch ist, und (die erwähnte erste Qualitätsanzeige = 1 UND die erwähnte erste Anzahl von Fehlern ≤ $T_2$) falsch ist und (die erwähnte zweite Qualitätsanzeige = 1 UND die erwähnte zweite Anzahl von Fehlern ≤ $T_3$) wahr ist und (die erwähnte vierte Qualitätsanzeige = 1 UND (die erwähnte dritte Qualitätsanzeige = 0 ODER die erwähnte vierte Anzahl von Fehlern ≤ die erwähnte dritte Anzahl von Fehlern)) wahr ist und (die erwähnte zweite Anzahl von Fehlern ≤ die erwähnte vierte Anzahl von Fehlern + $T_4$) wahr ist oder wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern ≤ $T_2$) falsch ist und (die erwähnte zweite Qualitätsanzeige = 1 UND die zweite Anzahl von Fehlern ≤ $T_3$) wahr ist und (die erwähnte vierte Qualitätsanzeige = 1 UND (die erwähnte dritte Qualitätsanzeige = 0 ODER die erwähnte vierte Anzahl von Fehlern ≤ die erwähnte dritte Anzahl von Fehlern)) falsch ist und (die erwähnte dritte Qualitätsanzeige = 1) wahr ist und (die erwähnte zweite Anzahl von Fehlern ≤ die dritte Anzahl von Fehlern + $T_5$) wahr ist, oder wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern ≤ $T_2$) falsch ist und (die erwähnte zweite Qualitätsanzeige = 1 UND die erwähnte zweite Anzahl von Fehlern ≤ $T_3$) wahr ist und (die erwähnte vierte Qualitätsanzeige = 1 UND (die erwähnte dritte Qualitätsanzeige = 0 ODER die erwähnte vierte Anzahl von Fehlern ≤ die erwähnte dritte Anzahl von Fehlern)) falsch ist und (die erwähnte dritte Qualitätsanzeige = 1) falsch ist;
Vorhersagen einer Viertelratenanzeige, wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern ≤ $T_2$) falsch ist und (die erwähnte zweite Qualitätsanzeige = 1 UND die erwähnte zweite Anzahl von Fehlern ≤ $T_3$) wahr ist und (die erwähnte vierte Qualitätsanzeige = 1 UND (die erwähnte dritte Qualitätsanzeige = 0 ODER die erwähnte vierte Anzahl von Fehlern ≤ die erwähnte dritte Anzahl von Fehlern)) falsch ist und (die erwähnte dritte Qualitätsanzeige = 1) wahr ist und (die erwähnte zweite Anzahl von Fehlern ≤ die erwähnte dritte Anzahl von Fehlern + $T_5$) falsch ist, oder wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern ≤ $T_2$) falsch ist und (die erwähnte zweite Qualitätsanzeige = 1 UND die erwähnte zweite Anzahl von Fehlern ≤ $T_3$) falsch ist und (die erwähnte dritte Qualitätsanzeige = 1 UND die erwähnte vierte Qualitätsanzeige = 1) wahr ist und (die erwähnte vierte Anzahl von Fehlern < der erwähnten dritten Anzahl von Fehlern UND die erwähnte vierte Anzahl von Fehlern ≤ $T_6$) falsch ist und (die erwähnte dritte Anzahl von Fehlern < der erwähnten vierten Anzahl von Fehlern UND der erwähnten dritten Anzahl von Fehlern ≤ $T_7$) wahr ist, oder wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern ≤ $T_2$) falsch ist und (die erwähnte zweite Qualitätsanzeige = 1 UND die erwähnte zweite Anzahl von Fehlern ≤ $T_3$) falsch ist und (die erwähnte dritte Qualitätsanzeige = 1 UND die erwähnte vierte Qualitätsanzeige = 1) falsch ist und (die erwähnte dritte Qualitätsanzeige = 1 UND die erwähnte dritte Anzahl von Fehlern ≤ $T_8$) wahr ist; und
Vorhersagen einer Achtelratenanzeige, wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern $\leq T_2$) falsch ist und (die erwähnte zweite Qualitätsanzeige = 1 UND die erwähnte zweite Anzahl von Fehlern $\leq T_3$) wahr ist und (die erwähnte vierte Qualitätsanzeige = 1 UND (die erwähnte dritte Qualitätsanzeige = 0 ODER die erwähnte vierte Anzahl von Fehlern $\leq$ der erwähnten dritten Anzahl von Fehlern)) wahr ist und (die erwähnte zweite Anzahl von Fehlern $\leq$ der erwähnten vierten Anzahl von Fehlern + $T_4$) falsch ist, oder wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern $\leq T_2$) falsch ist und (die erwähnte zweite Qualitätsanzeige = 1 UND die erwähnte zweite Anzahl von Fehlern $\leq T_3$) falsch ist und (die erwähnte dritte Qualitätsanzeige = 1 UND die erwähnte vierte Qualitätsanzeige = 1) wahr ist und (die erwähnte vierte Anzahl von Fehlern < der erwähnten dritten Anzahl von Fehlern UND die erwähnte vierte Anzahl von Fehlern $\leq T_6$) wahr ist, oder wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern $\leq T_2$) falsch ist und (die erwähnte zweite Qualitätsanzeige = 1 UND die erwähnte zweite Anzahl von Fehlern $\leq T_3$) falsch ist und (die erwähnte dritte Qualitätsanzeige = 1 UND die erwähnte vierte Qualitätsanzeige = 1) falsch ist und (die erwähnte dritte Qualitätsanzeige = 1 UND die erwähnte dritte Anzahl von Fehlern $\leq T_8$) falsch ist und (die erwähnte vierte Qualitätsanzeige = 1 UND die erwähnte vierte Anzahl von Fehlern $\leq T_9$) wahr ist;

wobei $T_1$, $T_2$, $T_3$, $T_4$, $T_5$, $T_6$, $T_7$, $T_8$ und $T_9$ feste Konstanten sind.

7. Verfahren nach Anspruch 6, wobei $T_{10}$ eine feste Konstante ist, und wobei ferner der folgende Schritt vorgesehen ist:

Erzeugung einer nicht wieder gewinnbaren Fehleranzeige, wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern $\leq T_2$) falsch ist und (die erwähnte zweite Qualitätsanzeige = 1 UND die erwähnte zweite Anzahl von Fehlern $\leq T_3$) falsch ist und (die dritte Qualitätsanzeige = 1 UND die erwähnte vierte Qualitätsanzeige = 1) wahr ist und (die erwähnte vierte Anzahl von Fehlern $\leq$ die erwähnte dritte Anzahl von Fehlern UND die erwähnte vierte Anzahl von Fehlern $\leq T_6$) falsch ist und (die erwähnte dritte Anzahl von Fehlern $\leq$ die erwähnte vierte Anzahl von Fehlern UND die erwähnte dritte Anzahl von Fehlern $\leq T_7$) falsch ist, oder wenn (die erwähnte erste Qualitätsanzeige = 1 UND die erwähnte zweite Qualitätsanzeige = 1) falsch ist und (die erwähnte erste Qualitätsanzeige = 1 UND die erwähnte erste Anzahl von Fehlern $\leq T_2$) falsch ist und (die erwähnte zweite Qualitätsanzeige = 1 und die erwähnte zweite Anzahl von Fehlern $\leq T_3$) falsch ist und (die erwähnte dritte Qualitätsanzeige = 1 UND die erwähnte vierte Qualitätsanzeige = 1) falsch ist und (die erwähnte dritte Qualitätsanzeige = 1 UND die erwähnte dritte Anzahl von Fehlern $\leq T_8$) falsch ist und (die vierte Qualitätsanzeige = 1 UND die erwähnte vierte Anzahl von Fehlern $\leq T_9$) falsch ist und (die erwähnte erste Anzahl von Fehlern $\leq T_{10}$) falsch ist.

8. Verfahren nach Anspruch 7, wobei ferner der folgende Schritt vorgesehen ist:

Vorsehen einer Voll-Raten-mit-Bit-Fehlern-Anzeige wenn (die erwähnte erste Qualitätsanzeige = 1 UND die erwähnte Qualitätsanzeige = 1) falsch ist und (die erwähnte erste Qualitätsanzeige = 1 UND die erwähnte erste Anzahl von Fehlern $\leq T_2$) falsch ist und (die erwähnte zweite Qualitätsanzeige = 1 UND die erwähnte zweite Anzahl von Fehlern $\leq T_3$) falsch ist und (die erwähnte dritte Qualitätsanzeige = 1 UND die erwähnte vierte Qualitätsanzeige = 1) falsch ist und (die erwähnte dritte Qualitätsanzeige = 1 UND die erwähnte dritte Anzahl von Fehlern $\leq T_8$) falsch ist und (die erwähnte vierte Qualitätsanzeige = 1 UND die erwähnte vierte Anzahl von Fehlern $\leq T_9$) falsch ist und (die erwähnte erste Anzahl von Fehlern $\leq T_{10}$) wahr ist.

9. Verfahren nach Anspruch 6 oder 8, wobei die erwähnte Vollratenverbindung oder -nachricht 9.600 Bits pro Sekunde ist.

10. Verfahren nach Anspruch 8, wobei

$T_1$ einen Wert gleich 15 hat;
$T_2$ einen Wert gleich 77 hat;
$T_3$ einen Wert gleich 60 hat;
$T_4$ einen Wert gleich 10 hat;
$T_5$ einen Wert gleich 10 hat;
$T_6$ einen Wert gleich 64 hat;
$T_7$ einen Wert gleich 60 hat;
$T_8$ einen Wert gleich 60 hat;
$T_9$ einen Wert gleich 64 hat; und

$T_{10}$ einen Wert gleich 71 hat.

11. Verfahren nach Anspruch 8, wobei

$T_1$ einen Wert gleich 15 hat;
$T_2$ einen Wert gleich 110 hat;
$T_3$ einen Wert gleich 84 hat;
$T_4$ einen Wert gleich 10 hat;
$T_5$ einen Wert gleich 10 hat;
$T_6$ einen Wert gleich 96 hat;
$T_7$ einen Wert gleich 76 hat;
$T_8$ einen Wert gleich 76 hat;
$T_9$ einen Wert gleich 96 hat; und
$T_{10}$ einen Wert gleich 78 hat.

12. Verfahren nach Anspruch 8, wobei

$T_1$ ungefähr 4% der Anzahl von Symbolen in einem Frame (Bereich, Rahmen) ist;
$T_2$ ungefähr 20% der Anzahl von Symbolen in einem Frame (Bereich, Rahmen) ist;
$T_3$ ungefähr 16% der Anzahl von Symbolen in einem Frame (Bereich, Rahmen) ist;
$T_4$ ungefähr 3% der Anzahl von Symbolen in einem Frame (Bereich, Rahmen) ist;
$T_5$ ungefähr 3% der Anzahl von Symbolen in einem Frame (Bereich, Rahmen) ist;
$T_6$ ungefähr 17% der Anzahl von Symbolen in einem Frame (Bereich, Rahmen) ist;
$T_7$ ungefähr 16% der Anzahl von Symbolen in einem Frame (Bereich, Rahmen) ist;
$T_8$ ungefähr 16% der Anzahl von Symbolen in einem Frame (Bereich, Rahmen) ist;
$T_9$ ungefähr 17% der Anzahl von Symbolen in einem Frame (Bereich, Rahmen) ist; und
$T_{10}$ ungefähr 19% der Anzahl von Symbolen in einem Frame (Bereich, Rahmen) ist;

13. Verfahren nach Anspruch 8, wobei:

$T_1$ ungefähr 4% der Anzahl von Symbolen in einem Bereich (Rahmen) ist;
$T_2$ ungefähr 29% der Anzahl von Symbolen in einem Bereich (Rahmen) ist;
$T_3$ ungefähr 22% der Anzahl von Symbolen in einem Bereich (Rahmen) ist;
$T_4$ ungefähr 3% der Anzahl von Symbolen in einem Bereich (Rahmen) ist;
$T_5$ ungefähr 3% der Anzahl von Symbolen in einem Bereich (Rahmen) ist;
$T_6$ ungefähr 25% der Anzahl von Symbolen in einem Bereich (Rahmen) ist;
$T_7$ ungefähr 20% der Anzahl von Symbolen in einem Bereich (Rahmen) ist;
$T_8$ ungefähr 20% der Anzahl von Symbolen in einem Bereich (Rahmen) ist;
$T_9$ ungefähr 25% der Anzahl von Symbolen in einem Bereich (Rahmen) ist; und
$T_{10}$ ungefähr 20% der Anzahl von Symbolen in einem Bereich (Rahmen) ist.

14. Verfahren nach Anspruch 1, wobei der Schritt des Reduzierens die folgenden Schritte umfaßt:

Zeitliche Unterteilung des empfangenen Signals zur Erzeugung eines früh empfangenen Signals und eines spät empfangenen Signals; und
Summieren des früh empfangenen Signals und des spät empfangenen Signals zur Erzeugung des erwähnten zweiten empfangenen Signals.

15. Verfahren nach Anspruch 1, wobei das empfangene Signal zeitlich unterteilt wird in einen Satz von Segmenten, und wobei der erwähnte Schritt des Reduzierens den Schritt des Selektierens eines Sub- oder Untersatzes des erwähnten Satzes von Segmenten des empfangenen Signals umfaßt, um das erwähnte zweite empfangene Signal zu erzeugen.

16. Verfahren nach Anspruch 2, wobei der Schritt des Reduzierens zur Erzeugung des erwähnten dritten Signals die folgenden Schritte umfaßt:

Zeitliche Unterteilung des erwähnten zweiten empfangenen Signals zur Erzeugung eines zweiten früh empfangenen Signals und eines zweiten spät empfangenen Signals; und

Summieren des erwähnten früh empfangenen zweiten Signals und des erwähnten spät empfangenen zweiten Signals zur Erzeugung des erwähnten dritten empfangenen Signals.

17. Verfahren nach Anspruch 2, wobei das erwähnte zweite empfangene Signal zeitlich unterteilt wird in einen Satz von Segmenten und wobei der Schritt des Reduzierens zur Erzeugung des erwähnten dritten Signals den Schritt des Selektierens eines Sub- oder Untersatzes des erwähnten Satzes von Segmenten des erwähnten zweiten Empfangssignals umfaßt, um das erwähnte dritte Empfangssignal zu erzeugen.

18. Verfahren nach Anspruch 1, wobei die erwähnte erste Qualitätsanzeige ein zyklisches Redundanzprüfresultat ist.

19. Verfahren nach Anspruch 2 oder 3, wobei die erwähnte erste Qualitätsanzeige, die erwähnte zweite Qualitätsanzeige und die erwähnte dritte Qualitätsanzeige jeweils eine Einzel-Bit-Qualitätsanzeige sind, wobei "1" eine hohe Wahrscheinlichkeit der erfolgreichen Dekodierung bei der erwähnten Datenrate entsprechend der erwähnten Qualitätsanzeige anzeigt, und "O" eine hohe Wahrscheinlichkeit einer fehlerhaften Dekodierung bei der erwähnten Datenrate entsprechend der erwähnten Qualitätsanzeige anzeigt.

20. Verfahren nach Anspruch 19, wobei der Schritt des Vorhersagens den Schritt des Vorhersagens einer ersten vorhergesagten Datenrate vorsieht, wenn die erste Qualitätsanzeige gleich "1" ist, und wenn die erwähnte erste Zahl von Fehlern kleiner als eine Schwellenzahl ist.

21. Verfahren nach Anspruch 19, wobei der Schritt der Vorhersage den Schritt des Vorhersagens der erwähnten ersten Datenrate aufweist, wenn die erwähnte erste Qualitätsanzeige gleich "1" ist und die erwähnte zweite Qualitätsanzeige gleich "1" ist, und wenn die erwähnte erste Anzahl von Fehlern kleiner ist als oder gleich der erwähnten zweiten Anzahl von Fehlern plus eine vorbestimmte Zahl.

22. Verfahren nach Anspruch 19, wobei die erste Datenrate 14.400 Bits pro Sekunde ist.

23. Verfahren nach Anspruch 1, wobei die folgenden Schritte vorgesehen sind:

Auswählen einer ersten Datenrate wenn die erwähnte Qualitätsanzeige entsprechend der erwähnten ersten Datenrate das erfolgreiche Dekodieren bei der erwähnten ersten Datenrate anzeigt und wenn die erwähnte Zahl von Fehlern entsprechend der erwähnten ersten Datenrate kleiner ist als eine erste Schwelle; und Auswahl einer zweiten Datenrate, wenn die Qualitätsanzeige entsprechend der erwähnten ersten Datenrate eine erfolgreiche Dekodierung anzeigt und die erwähnte Qualitätsanzeige entsprechend der erwähnten zweiten Datenrate eine erfolgreiche Dekodierung anzeigt, und wenn die erwähnte Zahl von Fehlern entsprechend der erwähnten ersten Datenrate eine zweite Schwelle übersteigt.

24. Verfahren nach Anspruch 23, wobei die erwähnte erste Schwelle eine vorbestimmte Konstante ist.

25. Verfahren nach Anspruch 23, wobei die erwähnte erste Schwelle eine vorbestimmte Konstante plus die erwähnte Anzahl von Fehlern entsprechend der zweiten Datenrate ist.

26. Verfahren nach Anspruch 23, wobei die erste Schwelle und die zweite Schwelle gleich sind und eine vorbestimmte Konstante plus die erwähnte Anzahl von Fehlern entsprechend der erwähnten zweiten Datenrate sind.

27. Verfahren nach Anspruch 3, wobei der folgende Schritt vorgesehen ist:
Auswahl der erwähnten zweiten Datenrate wenn die erwähnte Qualitätsanzeige entsprechend der ersten Datenrate eine nicht erfolgreiche Dekodierung anzeigt bei der erwähnten ersten Datenrate und wenn die erwähnte Qualitätsanzeige entsprechend der erwähnten zweiten Datenrate eine erfolgreiche Dekodierung bei der erwähnten zweiten Datenrate anzeigt und wenn die erwähnte Qualitätsanzeige entsprechend einer dritten Datenrate die nicht erfolgreiche Dekodierung bei der erwähnten dritten Datenrate anzeigt, und wenn die erwähnte Qualitätsanzeige entsprechend einer vierten Datenrate die erfolgreiche Dekodierung bei der vierten Datenrate anzeigt und die erwähnte Anzahl von Fehlern entsprechend der erwähnten zweiten Datenrate kleiner ist oder gleich einer dritten Schwelle.

28. Verfahren nach Anspruch 27, wobei die erwähnte dritte Schwelle eine vorbestimmte Konstante plus einer Anzahl von Fehlern entsprechend der erwähnten vierten Datenrate ist.

**29.** Verfahren nach Anspruch 27, wobei ferner der folgende Schritt vorgesehen ist:

Auswahl einer vierten Datenrate wenn die erwähnte Qualitätsanzeige entsprechend der erwaehnten ersten Datenrate das nicht erfolgreiche Dekodieren bei der erwähnten ersten Datenrate anzeigt, und wenn die erwähnte Qualitätsanzeige entsprechend der erwähnten zweiten Datenrate die erfolgreiche Dekodierung bei der erwähnten zweiten Datenrate anzeigt, und wenn die erwähnte Qualitätsanzeige entsprechend einer dritten Datenrate das nicht erfolgreiche Dekodieren bei der dritten Datenrate anzeigt, und wenn die Qualitätsanzeige entsprechend einer vierten Datenrate die erfolgreiche Dekodierung bei der vierten Datenrate anzeigt und die erwähnte Anzahl von Fehlern entsprechend der erwähnten zweiten Datenrate eine dritte Schwelle übersteigt.

**30.** Verfahren nach Anspruch 29, wobei die erwähnte dritte Schwelle eine vorbestimmte Konstante plus die erwähnte Anzahl von Fehlern entsprechend der erwähnten vierten Datenrate ist.

**31.** Verfahren nach Anspruch 27, wobei der folgende Schritt vorgesehen ist:

Auswahl der erwähnten zweiten Datenrate wenn die erwähnte Qualitätsanzeige entsprechend der ersten Datenrate das nicht erfolgreiche Dekodieren bei der erwähnten ersten Datenrate anzeigt, und wenn die erwähnte Qualitätsanzeige entsprechend der erwähnten zweiten Datenrate das erfolgreiche Dekodieren bei der erwähnten zweiten Datenrate anzeigt, und wenn die erwähnte Qualitätsanzeige entsprechend einer dritten Datenrate das nicht erfolgreiche Dekodieren bei der erwähnten dritten Datenrate anzeigt, und wenn die erwähnte Qualitätsanzeige entsprechend der erwähnten vierten Datenrate das nicht erfolgreiche Dekodieren bei der erwähnten vierten Datenrate anzeigt.

**32.** Verfahren nach Anspruch 27, wobei die folgenden Schritte vorgesehen sind:

Auswahl der erwähnten zweiten Datenrate wenn die erwähnte Qualitätsanzeige entsprechend der erwähnten ersten Datenrate das nicht erfolgreiche Dekodieren bei der erwähnten ersten Datenrate anzeigt, und wenn die erwähnte Qualitätsanzeige entsprechend der zweiten Datenrate die erfolgreiche Dekodierung bei der zweiten Datenrate anzeigt, und wenn die erwähnte Qualitätsanzeige entsprechend einer dritten Datenrate das erfolgreiche Dekodieren bei der dritten Datenrate anzeigt, und wenn die erwähnte Qualitätsanzeige entsprechend einer vierten Datenrate die erfolgreiche Dekodierung bei der vierten Datenrate anzeigt, und wenn die erwähnte Anzahl von Fehlern entsprechend der erwähnten zweiten Datenrate kleiner ist oder gleich der erwähnten Anzahl von Fehlern entsprechend der erwähnten dritten Datenrate plus eine feste Konstante.

**33.** Verfahren nach Anspruch 27, wobei der folgende Schritt vorgesehen ist:

Auswahl der erwähnten dritten Datenrate wenn die erwähnte Qualitätsanzeige entsprechend der erwähnten ersten Datenrate das nicht erfolgreiche Dekodieren bei der erwähnten ersten Datenrate anzeigt, und wenn die erwähnte Qualitätsanzeige entsprechend der erwähnten zweiten Datenrate die erfolgreiche Dekodierung bei der erwähnten zweiten Datenrate anzeigt, und wenn die erwähnte Qualitätsanzeige entsprechend einer dritten Datenrate das erfolgreiche Dekodieren bei der erwähnten dritten Datenrate anzeigt, und wenn die erwähnte Qualitätsanzeige entsprechend einer vierten Datenrate die erfolgreiche Dekodierung bei der vierten Datenrate anzeigt, und die erwähnte Anzahl von Fehlern entsprechend der erwähnten zweiten Datenrate die erwähnte Fehlerzahl entsprechend der erwähnten dritten Datenrate plus eine feste Konstante übersteigt.

**34.** Verfahren nach Anspruch 27, wobei der folgende Schritt vorgesehen ist:

Auswahl einer vierten Datenrate wenn die erwähnte Qualitätsanzeige entsprechend der erwähnten ersten Datenrate das nicht erfolgreiche Dekodieren bei der erwähnten ersten Datenrate anzeigt, und wenn die erwähnte Qualitätsanzeige entsprechend der erwähnten zweiten Datenrate die nicht erfolgreiche Dekodierung bei der erwähnten zweiten Datenrate anzeigt, und wenn die erwähnte Qualitätsanzeige entsprechend der erwähnten dritten Datenrate das nicht erfolgreiche Dekodieren bei der erwähnten dritten Datenrate anzeigt, und wenn die erwähnte Qualitätsanzeige entsprechend der erwähnten vierten Datenrate die erfolgreiche Dekodierung bei der erwähnten vierten Datenrate anzeigt, und die erwähnte Anzahl von Fehlern entsprechend der erwähnten vierten Datenrate kleiner ist oder gleich einer dritten vorbestimmten Schwelle.

**35.** Verfahren nach einem der vorhergehenden Ansprüche, wobei der Schritt oder die Schritte des Dekodierens und/oder Wiederdekodierens das Viterbi Dekodieren und/oder Wiederdekodieren umfaßt oder umfassen.

**36.** Verfahren zum Dekodieren eines empfangenen Signals mit einer unbekannten Datenrate, wobei die folgenden Schritte vorgesehen sind:

Bestimmung einer Datenrate entsprechend dem Verfahren einer der vorhergehenden Ansprüche;

Verwendung des dekodierten empfangenen Signals entsprechend der erwähnten vorbestimmten Datenrate als den Basen oder Grundlagen der weiteren Verarbeitung.

**37.** Vorrichtung zum Abschätzen einer Datenrate eines von einem Sender empfangenen Signals, wobei der Sender in der Lage ist Daten mit einer Vielzahl von Datenraten zu senden, und wobei folgendes vorgesehen ist:

ein erster Dekodierer (48) mit einem Eingang gekoppelt mit dem erwähnten Signal und mit einer dekodierten Signalausgangsgröße und einer Qualitätsanzeigeausgangsgröße und ein zweiter Dekodierer (50) mit einem Eingang gekoppelt mit dem erwähnten Signal und mit einem Dekodiersignalausgang und einem Qualitätsanzeigeausgang;

ein erster Kodierer (76) mit einem Eingang gekoppelt mit dem Dekodiersignalausgang des ersten Dekodierers (48) und mit einem Ausgang und ein zweiter Kodierer (78) mit einem Eingang gekoppelt mit dem erwähnten Dekodiersignalausgang des zweiten Dekodierers (50) und mit einem Ausgang;

ein erster Komperator (84) mit einem ersten Eingang gekoppelt mit dem erwähnten Ausgang des erwähnten ersten Kodierers (76) und mit einem zweiten Eingang gekoppelt mit dem erwähnten Signal und mit einem Ausgang und ein zweiter Komperator (86) mit einem ersten Eingang gekoppelt mit dem erwähnten Ausgang des erwähnten zweiten Kodierers (78) und mit einem zweiten Eingang gekoppelt mit dem Signal und mit einem Ausgang;

ein erster Zähler (100) mit einem Eingang gekoppelt mit dem erwähnten Ausgang des ersten Komperators (84) und mit einem Ausgang und ein zweiter Zähler (86) mit einem Eingang gekoppelt mit dem erwähnten Ausgang des erwähnten zweiten Komperators (86) und mit einem Ausgang; und

ein Prozessor (56) mit einer Vielzahl von Eingängen und einem Ausgang, wobei ein erster Eingang mit dem erwähnten Ausgang des ersten Zählers (100) gekoppelt ist, ein zweiter Eingang mit dem erwähnten Ausgang des zweiten Zählers (102) gekoppelt ist, ein dritter Eingang mit dem erwähnten Qualitätsanzeigeausgang des ersten Dekodierers (48) gekoppelt ist und ein vierter Eingang mit dem erwähnten Qualitätsanzeigeausgang des zweiten Dekodierers (50) gekoppelt ist;

wobei der erwähnte Ausgang des erwähnten Prozessors (56) die erwähnte Datenrate des Signals abschätzt.

**38.** Vorrichtung (12) zum Abschätzen einer Datenrate eines von einem Sender (10) empfangenen Signals, wobei der Sender in der Lage ist, Daten mit einer Vielzahl von Datenraten auszusenden, und wobei die Vorrichtung folgendes aufweist:

Dekodiermittel (48, 50, 52, 54) zum sequentiellen Dekodieren des erwähnten Signals mit einer Vielzahl von Datenraten zum sequentiellen Erzeugen einer dekodierten Signalausgangsgröße entsprechend jeder der erwähnten Vielzahl von Datenraten und zum sequentiellen Vorsehen einer Qualitätsanzeigeausgangsgröße entsprechend jeder der erwähnten Vielzahl von Datenraten;

Kodiermittel (76, 78, 80, 82) zum sequentiellen Kodieren der dekodierten Signalausgangsgröße entsprechend jeder der erwähnten Vielzahl von Datenraten und zum sequentiellen Erzeugen eines abgeschätzten empfangenen Signals entsprechend jeder der erwähnten Vielzahl von Datenraten;

Mittel (84, 86, 88, 90) zum sequentiellen Vergleichen des erwähnten Signals mit dem abgeschätzten empfangenen Signal entsprechend jeder der Vielzahl von Datenraten und Erzeugung einer Anzeige, wenn das abgeschätzte Empfangssignal fehlerhaft bezüglich des erwähnten Signals ist;

Mittel (100, 102, 104, 106) zum sequentiellen Zählen einer Anzahl der Anzeigen entsprechend jeder der erwähnten Vielzahl von Datenraten; und

Verarbeitungs- oder Prozessormittel (56) zum Empfang der erwähnten Anzahl von Anzeigen entsprechend jeder der erwähnten Vielzahl von Datenraten und der Qualitätsanzeigeausgangsgröße entsprechend jeder der erwähnten Vielzahl von Datenraten und zum Abschätzen der erwähnten Datenrate des erwähnten Signals.

**39.** Vorrichtung nach Anspruch 37, wobei folgendes vorgesehen ist:

der erwähnte erste Dekoder ist ein Viterbi-Dekoder (48);

der erste Qualitätsanzeigegenerator (116) ist mit einem Eingang gekoppelt mit dem erwähnten Ausgang des erwähnten ersten Viterbi-Dekoders (48) ausgestattet und besitzt einen Ausgang;

der erwähnte zweite Dekoder ist ein Viterbi-Dekoder (50);

ein zweiter Qualitätsanzeigegenerator (118) ist vorgesehen mit einem Eingang gekoppelt mit dem erwähnten Ausgang des erwähnten zweiten Viterbi-Dekoders (50) und besitzt einen Ausgang;

der erwähnte dritte Eingang zum Prozessor (56) ist mit dem erwähnten Ausgang des ersten Qualitätsanzeigegenerators (116) gekoppelt und der erwähnte vierte Eingang des Prozessor (56) ist mit dem erwähnten Ausgang des erwähnten zweiten Qualitätsanzeigegenerators (118) gekoppelt.

**40.** Vorrichtung nach Anspruch 39, wobei ferner ein erster Selektor (182) vorgesehen ist, und zwar angeordnet zwischen dem erwähnten Signal und dem erwähnten zweiten Viterbi-Dekoder (196).

**41.** Vorrichtung nach Anspruch 39, wobei ferner ein erster Summierer (34) zwischen dem erwähnten Signal und dem erwähnten zweiten Viterbi-Dekoder (50) angeordnet ist.

**42.** Vorrichtung nach Anspruch 39, wobei ferner folgendes vorgesehen ist:

ein dritter Viterbi Dekoder (52) mit einem Eingang gekoppelt mit dem erwähnten Signal und mit einem Ausgang;
ein dritter Qualitätsanzeigegenerator mit einem Eingang gekoppelt mit dem Ausgang des erwähnten dritten Viterbi-Dekoders (52) und mit einem Ausgang,
ein dritter Kodierer (80) mit einem Eingang gekoppelt mit dem erwähnten Ausgang des erwähnten dritten Viterbi-Dekodierers (52) und mit einem Ausgang;
ein dritter Komperator (88) mit einem ersten Eingang gekoppelt mit dem erwähnten Ausgang des erwähnten dritten Dekodierers (80) und mit einem zweiten Eingang gekoppelt mit dem erwähnten Signal und mit einem Ausgang; und
einen dritten Zähler (104) mit einem Eingang gekoppelt mit dem erwähnten Ausgang des erwähnten dritten Komperators (88) und mit einem Ausgang;
und wobei der Prozessor (56) einen fünften Eingang aufweisen soll gekoppelt mit dem erwähnten Ausgang des erwähnten dritten Zählers (104), und wobei ein sechster Ausgang gekoppelt ist mit dem Ausgang des erwähnten dritten Qualitätsanzeigegenerators.

**43.** Vorrichtung nach Anspruch 42, wobei ferner ein erster Selektor (182) zwischen dem erwähnten Signal und dem erwähnten zweiten Viterbi-Dekoder (196) vorgesehen ist.

**44.** Vorrichtung nach Anspruch 43, wobei ferner ein zweiter Selektor (184) zwischen dem erwähnten ersten Selektor und dem erwähnten dritten Viterbi-Dekoder (198) vorgesehen ist.

**45.** Vorrichtung nach Anspruch 42, wobei ferner ein erster Summierer (34) zwischen dem erwähnten Signal und dem erwähnten zweiten Viterbi-Dekoder (50) vorgesehen ist.

**46.** Vorrichtung nach Anspruch 45, wobei ferner ein zweiter Summierer (36) zwischen dem erwähnten Signal und dem erwähnten dritten Viterbi-Dekoder (52) vorgesehen ist.

**47.** Vorrichtung nach Anspruch 42, wobei ferner folgendes vorgesehen ist:

ein vierter Viterbi-Dekoder (54) mit einem Eingang gekoppelt mit dem erwähnten Signal und mit einem Ausgang;
ein vierter Qualitätsanzeigegenerator mit einem Eingang gekoppelt mit dem erwähnten Ausgang des erwähnten vierten Viterbi-Dekoders (54) und mit einem Ausgang;
ein vierter Kodierer (82) mit einem Eingang gekoppelt mit dem erwähnten Ausgang des erwähnten vierten Viterbi-Dekoders (54) und mit einem Ausgang;
ein vierter Komperator (90) mit einem ersten Eingang gekoppelt mit dem erwähnten Ausgang des erwähnten vierten Kodierers (82) und mit einem zweiten Eingang gekoppelt mit dem erwähnten Signal und mit einem Ausgang; und
ein vierter Zähler (108) mit einem Eingang gekoppelt mit dem erwähnten Ausgang des erwähnten vierten Komperators (90) und mit einem Ausgang;
und wobei der Prozessor (56) einen siebten Eingang besitzt, und zwar gekoppelt mit dem erwähnten Ausgang des erwaehnten vierten Zaehlers (106) und wobei der Prozessor einen achten Eingang besitzt, und zwar gekoppelt mit dem erwaehnten Ausgang des erwaehnten vierten Qualitaetsanzeigegenerators.

**Revendications**

**1.** Procédé pour déterminer une cadence de données d'un signal reçu dans un récepteur dans un système de communication à cadence variable, comprenant les étapes suivantes :

décoder et recoder à une première cadence de données le signal reçu pour produire une première prédiction de signal reçu et pour produire une première indication de qualité ;

comparer la première prédiction de signal reçu au signal reçu et compter un premier nombre d'erreurs, une erreur survenant quand le signal reçu ne s'accorde pas avec la première prédiction de signal reçu, et le premier nombre d'erreurs et la première indication de qualité définissant une première métrique d'erreur ;

réduire le signal reçu pour produire un deuxième signal reçu représentant une deuxième cadence de données ;

décoder et recoder à la deuxième cadence de données, le deuxième signal reçu pour produire une deuxième prédiction de signal reçu et pour produire une deuxième indication de qualité ;

comparer la deuxième prédiction de signal reçu au deuxième signal reçu et compter un deuxième nombre d'erreurs, une erreur survenant quand le deuxième signal reçu ne s'accorde pas à la deuxième prédiction de signal reçu, et le deuxième nombre d'erreurs et la deuxième indication de qualité définissant une deuxième métrique d'erreur ; et

prédire la cadence de données du signal reçu sur la base d'une comparaison de chacune des métriques d'erreurs.

2. Procédé selon la revendication 1 comprenant les étapes suivantes :

réduire le signal reçu pour produire un troisième signal reçu représentant une troisième cadence de données ;

décoder et recoder à la troisième cadence de données le troisième signal reçu pour produire une troisième prédiction de signal reçu et une troisième indication de qualité ; et

comparer la troisième prédiction de signal reçu au troisième signal reçu et compter un troisième nombre d'erreurs, une erreur survenant quand le troisième signal reçu ne s'accorde pas à la troisième prédiction de signal reçu et le troisième nombre d'erreurs et la troisième indication de qualité définissant une troisième métrique d'erreur.

3. Procédé selon la revendication 2 comprenant en outre les étapes suivantes :

réduire le signal reçu pour produire un quatrième signal reçu représentant une quatrième cadence de données ;

décoder et recoder à la quatrième cadence de données le quatrième signal reçu et produire une quatrième prédiction de signal reçu et produire une quatrième indication de qualité ; et

comparer la quatrième prédiction de signal reçu au quatrième signal reçu et compter un quatrième nombre d'erreurs, une erreur survenant quand le quatrième signal reçu ne s'accorde pas à la quatrième prédiction de signal reçu et le quatrième nombre d'erreurs et la quatrième indication de qualité définissant une quatrième métrique d'erreur.

4. Procédé selon la revendication 3, dans lequel la première cadence de données correspond à une communication à plein débit ;

la deuxième cadence de données correspond à une communication à demi débit ;
la troisième cadence de données correspond à une communication au quart du débit ; et
la quatrième cadence de données correspond à une communication au huitième du débit.

5. Procédé selon la revendication 4, dans lequel la première indication de qualité, la deuxième indication de qualité, la troisième indication de qualité et la quatrième indication de qualité sont chacune une indication de qualité binaire à bit unique dans laquelle un "1" indique une probabilité élevée pour que la cadence de données du signal reçu soit la cadence de données correspondant à l'indication de qualité et un "0" indique que la cadence de données du signal reçu n'est pas la cadence de données correspondant à l'indication de qualité.

6. Procédé selon la revendication 5, dans lequel l'étape de prédiction de la cadence de données du signal reçu comprend les étapes suivantes :

prédire ladite première cadence de données si (la première indication de qualité = 1 ET la deuxième indication de qualité = 1) est vrai et (le premier nombre d'erreurs ≤ au deuxième nombre d'erreurs + $T_1$) est vrai, ou si (la première indication de qualité = 1 ET la deuxième indication de qualité = 1) est faux et (la première indication de qualité = 1 ET le premier nombre d'erreurs ≤ $T_2$) est vrai ;

prédire une indication de mi-vitesse si (la première indication de qualité = 1 ET la deuxième indication de qualité = 1) est vrai et si (le premier nombre d'erreurs ≤ au deuxième nombre d'erreurs + $T_1$) est faux, ou si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est vrai et (la quatrième indication de qualité = 1 ET (la troisième indication de qualité = 0 OU le quatrième nombre d'erreurs ≤ au troisième nombre d'erreurs )) est vrai et (le deuxième nombre d'erreurs ≤ au quatrième nombre d'erreurs + $T_4$) est vrai, ou si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est vrai et (la quatrième indication de qualité = 1 ET (la troisième indication de qualité = 0 OU le quatrième nombre d'erreurs ≤ au troisième nombre d'erreurs)) est faux et (la troisième indication de qualité = 1) est vrai et (le deuxième nombre d'erreurs ≤ au troisième nombre d'erreurs + $T_5$) est vrai, ou si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est vrai et (la quatrième indication de qualité = 1 ET (la troisième indication de qualité = 0 OU le quatrième nombre d'erreurs ≤ au troisième nombre d'erreurs)) est faux et (la troisième indication de qualité = 1) est faux ;

prédire une indication de quart de vitesse si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est vrai et (la quatrième indication de qualité = 1 ET (la troisième indication de qualité = 0 OU le quatrième nombre d'erreurs ≤ au troisième nombre d'erreurs)) est faux et (la troisième indication de qualité = 1) est vrai et (le deuxième nombre d'erreurs ≤ au troisième nombre d'erreurs + $T_5$) est faux, ou si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est faux et (la troisième indication de qualité = 1 ET la quatrième indication de qualité = 1) est vrai et (le quatrième nombre d'erreurs < au troisième nombre d'erreurs ET le quatrième nombre d'erreurs ≤ $T_6$) est faux et (le troisième nombre d'erreurs < au quatrième nombre d'erreurs ET le troisième nombre d'erreurs ≤ $T_7$) est vrai, ou si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est faux et (la troisième indication de qualité = 1 ET la quatrième indication de qualité = 1) est faux et (la troisième indication de qualité = 1 ET le troisième nombre d'erreurs ≤ $T_8$) est vrai ;

prédire une indication de huitième de vitesse si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est vrai et (la quatrième indication de qualité = 1 ET (la troisième indication de qualité = 0 OU le quatrième nombre d'erreurs ≤ au troisième nombre d'erreurs)) est vrai et (le deuxième nombre d'erreurs ≤ au quatrième nombre d'erreurs + $T_4$) est faux, ou si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est faux et (la troisième indication de qualité = 1 ET la quatrième indication de qualité = 1) est vrai et (le quatrième nombre d'erreurs < au troisième nombre d'erreurs ET le quatrième nombre d'erreurs ≤ $T_6$) est vrai, ou si (la première indication de qualité = 1 ET la deuxième indication de qualité = 1) est faux et (la première indication de qualité = 1 ET le premier nombre d'erreurs ≤ T2) est faux et (la deuxième indication de qualité = 1 ET le deuxième nombre d'erreurs ≤ $T_3$) est faux et (la troisième indication de qualité = 1 ET la quatrième indication de qualité = 1) est faux et (la troisième indication de qualité = 1 ET le troisième nombre d'erreurs ≤ $T_8$) est faux et (la quatrième indication de qualité = 1 ET le quatrième nombre d'erreurs ≤ $T_9$) est vrai ;

dans lequel $T_1$, $T_2$, $T_3$, $T_4$, $T_5$, $T_6$, $T_7$, $T_8$, $T_9$ sont des constantes fixes.

**7.** Procédé selon la revendication 6, dans lequel $T_{10}$ est une constante fixe, comprenant en outre l'étape consistant à produire une indication d'erreur irrécupérable si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est faux et (la troisième indication de qualité = 1 ET la quatrième indication de qualité = 1) est vrai et (le quatrième nombre d'erreurs < au troisième nombre d'erreurs ET le quatrième nombre d'erreurs ≤ $T_6$) est faux et (le troisième nombre d'erreurs < au quatrième nombre d'erreurs ET le troisième nombre d'erreurs ≤ $T_7$) est faux, ou si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est faux et (la troisième indication de qualité = 1 ET la quatrième indication de qualité = 1) est faux et (la troisième indication de qualité = 1 ET le troisième nombre d'erreurs ≤ $T_8$) est faux et (la quatrième indication de qualité = 1 ET le quatrième nombre d'erreurs ≤ $T_9$) est vrai et (le premier nombre d'erreurs ≤ $T_{10}$) est faux.

8. Procédé selon la revendication 7 comprenant en outre l'étape consistant à produire une indication de pleine cadence avec erreurs de bit si (la première indication de qualité = 1 ET la deuxième indication de qualité = 1) est faux et (la première indication de qualité = 1 ET le premier nombre d'erreurs ≤ $T_2$) est faux et (la deuxième indication de qualité = 1 ET le deuxième nombre d'erreurs ≤ $T_3$) est faux et (la troisième indication de qualité = 1 ET la quatrième indication de qualité = 1) est faux et (la troisième indication de qualité = 1 ET le troisième nombre d'erreurs ≤ $T_8$) est faux et (la quatrième indication de qualité = 1 ET le quatrième nombre d'erreurs ≤ $T_9$) est faux et (le premier nombre d'erreurs ≤ $T_{10}$) est vrai.

9. Procédé selon la revendication 6 ou 8, dans lequel la communication à pleine cadence est à 9 600 bits par seconde.

10. Procédé selon la revendication 8, dans lequel : $T_1$ a une valeur égale à 15,

$T_2$ a une valeur égale à 77,
$T_3$ a une valeur égale à 60,
$T_4$ a une valeur égale à 10,
$T_5$ a une valeur égale à 10,
$T_6$ a une valeur égale à 64,
$T_7$ a une valeur égale à 60,
$T_8$ a une valeur égale à 60,
$T_9$ a une valeur égale à 64, et
$T_{10}$ a une valeur égale à 71.

11. Procédé selon la revendication 8, dans lequel :

$T_1$ a une valeur égale à 15,
$T_2$ a une valeur égale à 110,
$T_3$ a une valeur égale à 84,
$T_4$ a une valeur égale à 10,
$T_5$ a une valeur égale à 10,
$T_6$ a une valeur égale à 96,
$T_7$ a une valeur égale à 76,
$T_8$ a une valeur égale à 76,
$T_9$ a une valeur égale à 96, et
$T_{10}$ a une valeur égale à 78.

12. Procédé selon la revendication 8, dans lequel :

$T_1$ est environ 4% du nombre de symboles dans une trame,
$T_2$ est environ 20% du nombre de symboles dans une trame,
$T_3$ est environ 16% du nombre de symboles dans une trame,
$T_4$ est environ 3% du nombre de symboles dans une trame,
$T_5$ est environ 3% du nombre de symboles dans une trame,
$T_6$ est environ 17% du nombre de symboles dans une trame,
$T_7$ est environ 16% du nombre de symboles dans une trame,
$T_8$ est environ 16% du nombre de symboles dans une trame,
$T_9$ est environ 17% du nombre de symboles dans une trame, et
$T_{10}$ est environ 19% du nombre de symboles dans une trame.

13. Procédé selon la revendication 8, dans lequel :

$T_1$ est environ 4% du nombre de symboles dans une trame,
$T_2$ est environ 29% du nombre de symboles dans une trame,
$T_3$ est environ 22% du nombre de symboles dans une trame,
$T_4$ est environ 3% du nombre de symboles dans une trame,
$T_5$ est environ 3% du nombre de symboles dans une trame,

$T_6$ est environ 25% du nombre de symboles dans une trame,
$T_7$ est environ 20% du nombre de symboles dans une trame,
$T_8$ est environ 20% du nombre de symboles dans une trame,
$T_9$ est environ 25% du nombre de symboles dans une trame, et
$T_{10}$ est environ 20% du nombre de symboles dans une trame.

**14.** Procédé selon la revendication 1, dans lequel l'étape de réduction comprend les étapes suivantes :

diviser dans le temps le signal reçu pour produire un signal reçu avancé et un signal reçu retardé ; et
sommer le signal reçu avancé et le signal reçu retardé pour produire le deuxième signal reçu.

**15.** Procédé selon la revendication 1, dans lequel le signal reçu est divisé dans le temps en un ensemble de segments, et dans lequel l'étape de réduction comprend l'étape de sélection d'un sous-ensemble dudit ensemble de segments du signal reçu pour produire un deuxième signal reçu.

**16.** Procédé selon la revendication 2, dans lequel l'étape de réduction pour produire le troisième signal comprend les étapes suivantes :

diviser dans le temps le deuxième signal reçu pour produire un deuxième signal reçu avancé et un deuxième signal reçu retardé ;
sommer le deuxième signal reçu avancé et le deuxième signal reçu retardé pour produire le troisième signal reçu.

**17.** Procédé selon la revendication 2, dans lequel le deuxième signal reçu est divisé dans le temps en un ensemble de segments et, dans lequel l'étape de réduction pour produire le troisième signal reçu comprend l'étape consistant à sélectionner un sous-ensemble de l'ensemble de segments du deuxième signal reçu pour produire le troisième signal reçu.

**18.** Procédé selon la revendication 1, dans lequel la première indication de qualité est le résultat d'une vérification de redondance cyclique.

**19.** Procédé selon la revendication 2 ou 3, dans lequel la première indication de qualité, la deuxième indication de qualité, et la troisième indication de qualité sont chacune une indication de qualité à bit unique, dans laquelle un "1" indique une forte probabilité de décodage avec succès de la cadence de données correspondant à l'indication de qualité et un "0" indique une forte probabilité de décodage défectueux à la cadence de données correspondant à l'indication de qualité.

**20.** Procédé selon la revendication 19, dans lequel l'étape de prédiction comprend l'étape de prédiction d'une première cadence de données prédite si la première indication de qualité est égale à 1 et si le premier nombre d'erreurs est inférieur à un nombre seuil.

**21.** Procédé selon la revendication 19, dans lequel l'étape de prédiction comprend l'étape de prédiction de la première cadence de données si la première indication de qualité est égale à 1, si la deuxième indication de qualité est égale à 1, et si le premier nombre d'erreurs est inférieur ou égal au deuxième nombre d'erreurs plus un nombre prédéterminé.

**22.** Procédé selon la revendication 19, dans lequel la première cadence de données est de 14 400 bits par seconde.

**23.** Procédé selon la revendication 1 comprenant les étapes suivantes :

sélectionner une première cadence de données si l'indication de qualité correspondant à la première cadence de données indique un décodage avec succès à la première cadence de données et si le nombre d'erreurs correspondant à la première cadence de données est inférieur à un premier seuil ; et
sélectionner une deuxième cadence de données si l'indication de qualité correspondant à la première cadence de données indique un décodage avec succès et si l'indication de qualité correspondant à la deuxième cadence de données indique un décodage avec succès et si le nombre d'erreurs correspondant à la première cadence de données dépasse un deuxième seuil.

**24.** Procédé selon la revendication 23, dans lequel le premier seuil est une constante prédéterminée.

**25.** Procédé selon la revendication 23, dans lequel le premier seuil est une constante prédéterminée plus le nombre d'erreurs correspondant à la deuxième cadence de données.

**26.** Procédé selon la revendication 23, dans lequel le premier seuil et le deuxième seuil sont égaux et sont une constante prédéterminée plus le nombre d'erreurs correspondant à la deuxième cadence de données.

**27.** Procédé selon la revendication 3 comprenant l'étape consistant à sélectionner la deuxième cadence de données si l'indication de qualité correspondant à la première cadence de données indique un décodage sans succès à la première cadence de données et si l'indication de qualité correspondant à la deuxième cadence de données indique un décodage avec succès à la deuxième cadence de données et si l'indication de qualité correspondant à la troisième cadence de données indique un décodage sans succès à la troisième cadence de données et si l'indication de qualité correspondant à la quatrième cadence de données indique un décodage avec succès à la quatrième cadence de données et que le nombre d'erreurs correspondant à la deuxième cadence de données est inférieur ou égal à un troisième seuil.

**28.** Procédé selon la revendication 27, dans lequel le troisième seuil est une constante prédéterminée plus le nombre d'erreurs correspondant à la quatrième cadence de données.

**29.** Procédé selon la revendication 27 comprenant en outre l'étape consistant à sélectionner une quatrième cadence de données si l'indication de qualité correspondant à la première cadence de données indique un décodage sans succès à la première cadence de données et si l'indication de qualité correspondant à la deuxième cadence de données indique un décodage avec succès à la deuxième cadence de données et si l'indication de qualité correspondant à une troisième cadence de données indique un décodage sans succès à la troisième cadence de données et si l'indication de qualité correspondant à la quatrième cadence de données indique un décodage avec succès à la quatrième cadence de données et que le nombre d'erreurs correspondant à la deuxième cadence de données dépasse un troisième seuil.

**30.** Procédé selon la revendication 29, dans lequel le troisième seuil est une constante prédéterminée plus le nombre d'erreurs correspondant à la quatrième cadence de données.

**31.** Procédé selon la revendication 27 comprenant l'étape consistant à sélectionner la deuxième cadence de données si l'indication de qualité correspondant à la première cadence de données indique un décodage sans succès à la première cadence de données et si l'indication de qualité correspondant à la deuxième cadence de données indique un décodage avec succès à la deuxième cadence de données et si l'indication de qualité correspondant à la troisième cadence de données indique un décodage sans succès à la troisième cadence de données et si l'indication de qualité correspondant à la quatrième cadence de données indique un décodage sans succès à la quatrième cadence de données.

**32.** Procédé selon la revendication 27 comprenant l'étape consistant à sélectionner la deuxième cadence de données si l'indication de qualité correspondant à la première cadence de données indique un décodage sans succès à la première cadence de données et si l'indication de qualité correspondant à la deuxième cadence de données indique un décodage avec succès à la deuxième cadence de données et si l'indication de qualité correspondant à une troisième cadence de données indique un décodage avec succès à la troisième cadence de données et si l'indication de qualité correspondant à la quatrième cadence de données indique un décodage avec succès à la quatrième cadence de données et que le nombre d'erreurs correspondant à la deuxième cadence de données est inférieur ou égal au nombre d'erreurs correspondant à la troisième cadence de données plus une constante fixe.

**33.** Procédé selon la revendication 27 comprenant l'étape consistant à sélectionner la troisième cadence de données si l'indication de qualité correspondant à la première cadence de données indique un décodage sans succès à la première cadence de données et si l'indication de qualité correspondant à la deuxième cadence de données indique un décodage avec succès à la deuxième cadence de données et si l'indication de qualité correspondant à une troisième cadence de données indique un décodage avec succès à la troisième cadence de données et si l'indication de qualité correspondant à une quatrième cadence de données indique un décodage avec succès à la quatrième cadence de données et que le nombre d'erreurs correspondant à la deuxième cadence de données dépasse le nombre d'erreurs correspondant à la troisième cadence de données plus une constante fixe.

**34.** Procédé selon la revendication 27 comprenant l'étape consistant à sélectionner une quatrième cadence de données si l'indication de qualité correspondant à la première cadence de données indique un décodage sans succès à la première cadence de données et si l'indication de qualité correspondant à la deuxième cadence de données indique un décodage sans succès à la deuxième cadence de données et si l'indication de qualité correspondant à la troisième cadence de données indique un décodage sans succès à la troisième cadence de données et si l'indication de qualité correspondant à la quatrième cadence de données indique un décodage avec succès à la quatrième cadence de données et que le nombre d'erreurs correspondant à la quatrième cadence de données est inférieur ou égal à un troisième seuil prédéterminé.

**35.** Procédé selon l'une quelconque des revendications précédentes, dans lequel l'étape ou les étapes de décodage et/ou de recodage comprennent un décodage et/ou un recodage de Viterbi.

**36.** Procédé de décodage d'un signal reçu à une cadence de données inconnue comprenant les étapes suivantes :

déterminer une cadence de données selon le procédé de l'une quelconque des revendications précédentes ; et utiliser le signal reçu décodé correspondant à la cadence de données déterminée en tant que base d'un traitement ultérieur.

**37.** Appareil pour estimer une cadence de données d'un signal reçu à partir d'un émetteur capable d'émettre des données à une pluralité de cadences de données comprenant :

un premier décodeur (48) ayant une entrée couplée audit signal et ayant une sortie de signal décodé et une sortie d'indication de qualité et un deuxième décodeur (50) ayant une entrée couplée audit signal, une sortie de signal décodé et une sortie d'indication de qualité ;
un premier codeur (76) ayant une entrée couplée à la sortie de signal décodé du premier décodeur (48) et une sortie, et un deuxième codeur (78) ayant une entrée couplée à la sortie de signal décodé du deuxième décodeur (50) et une sortie ;
un premier comparateur (84) ayant une première entrée couplée à la sortie du premier codeur (76), une deuxième entrée couplée audit signal et une sortie, et un deuxième comparateur (86) ayant une première entrée couplée à la sortie du deuxième codeur (78), une deuxième entrée couplée audit signal et une sortie ;
un premier compteur (100) ayant une entrée couplée à la sortie du premier comparateur (84) et une sortie, et un deuxième compteur (102) ayant une entrée couplée à la sortie du deuxième comparateur (86) et une sortie ;
un processeur (56) ayant une pluralité d'entrées et une sortie, dans lequel une première entrée est couplée à la sortie du premier compteur (100), une deuxième entrée est couplée à la sortie du deuxième compteur (102), une troisième entrée est couplée à la sortie d'indication de qualité du premier décodeur (48), et une quatrième entrée est couplée à la sortie d'indication de qualité du deuxième décodeur (50) ;
dans lequel la sortie du processeur (56) estime la cadence de données dudit signal.

**38.** Appareil (12) pour estimer une cadence de données d'un signal reçu à partir d'un émetteur (10) capable d'émettre des données à une pluralité de cadences de données, comprenant :

un moyen de décodage (48, 50, 52, 54) pour décoder séquentiellement le signal à une pluralité de cadences de données, pour produire séquentiellement une sortie de signal décodé correspondant à chacune de la pluralité de cadences de données et pour fournir séquentiellement une sortie d'indication de qualité correspondant à chacune de la pluralité de cadences de données ;
un moyen de codage (76, 78, 80, 82) pour coder séquentiellement la sortie de signal décodé correspondant à chacune de la pluralité de cadences de données et pour produire séquentiellement un signal reçu estimé correspondant à chacune de la pluralité de cadences de données ;
un moyen (84, 86, 88, 90) pour comparer séquentiellement ledit signal au signal reçu estimé correspondant à chacune de la pluralité de cadences de données et produire une indication quand le signal reçu estimé est en erreur par rapport audit signal ;
des moyens (100, 102, 104, 106) pour compter séquentiellement un nombre d'indications correspondant à chacune de la pluralité de cadences de données ;
un moyen de traitement (56) pour recevoir le nombre d'indications correspondant à chacune de la pluralité de cadences de données et la sortie d'indication de qualité correspondant à chacune de la pluralité de cadences de données et pour estimer la cadence de données dudit signal.

**39.** Appareil selon la revendication 37, dans lequel :

le premier décodeur est un décodeur de Viterbi (48) ;

un premier générateur d'indication de qualité (116) est prévu, et a une entrée couplée à la sortie du premier décodeur de Viterbi (48) et une sortie ;

le deuxième décodeur est un décodeur de Viterbi (50) ;

un deuxième générateur d'indication de qualité (118) est prévu, et a une entrée couplée à la sortie du deuxième décodeur de Viterbi (50) et une sortie ; et

la troisième entrée du processeur (56) est couplée à la sortie du premier générateur d'indication de qualité (116) et la quatrième entrée du processeur (56) est couplée à la sortie du deuxième générateur d'indication de qualité (118).

40. Appareil selon la revendication 39 comprenant un premier sélecteur (182) interposé entre ledit signal et le deuxième décodeur de Viterbi (196).

41. Appareil selon la revendication 39 comprenant un premier sommateur (34) interposé entre ledit signal et le deuxième décodeur de Viterbi (50).

42. Appareil selon la revendication 39 comprenant en outre :

un troisième décodeur de Viterbi (52) ayant une entrée couplée au signal et une sortie ;

un troisième générateur d'indication de qualité ayant une entrée couplée à la sortie du troisième décodeur de Viterbi (52) et une sortie ;

un troisième codeur (80) ayant une entrée couplée à la sortie du troisième décodeur de Viterbi (52) et une sortie ;

un troisième comparateur (88) ayant un première entrée couplée à la sortie du troisième codeur (80), une deuxième entrée couplée audit signal, et une sortie ;

un troisième compteur (104) ayant une entrée couplée à la sortie du troisième comparateur (88) et une sortie ; et dans lequel le processeur (56) a une cinquième entrée couplée à la sortie du troisième compteur (104) et une sixième entrée couplée à la sortie du troisième générateur d'indication de qualité.

43. Appareil selon la revendication 42 comprenant en outre un premier sélecteur (182) interposé entre ledit signal et le deuxième décodeur de Viterbi (196).

44. Appareil selon la revendication 43 comprenant un deuxième sélecteur (184) interposé entre le premier sélecteur et le troisième décodeur de Viterbi (198).

45. Appareil selon la revendication 42 comprenant en outre un premier sommateur (34) interposé entre ledit signal et le deuxième décodeur de Viterbi (50).

46. Appareil selon la revendication 45 comprenant un deuxième sommateur (36) interposé entre ledit signal et le troisième décodeur de Viterbi (52).

47. Appareil selon la revendication 42 comprenant en outre :

un quatrième décodeur de Viterbi (54) ayant une entrée couplée au signal et ayant une sortie ;

un quatrième générateur d'indication de qualité ayant une entrée couplée à la sortie du quatrième décodeur de Viterbi (54) et une sortie ;

un quatrième codeur (82) ayant une entrée couplée à la sortie du quatrième décodeur de Viterbi (54) et une sortie ;

un quatrième comparateur (90) ayant une première entrée couplée à la sortie du quatrième codeur (82), une deuxième entrée couplée au signal et une sortie ;

un quatrième compteur (106) ayant une entrée couplée à la sortie du quatrième comparateur (90) et une sortie ; et dans lequel ledit processeur (56) a une septième entrée couplée à la sortie du quatrième compteur (106) et une huitième entrée couplée à la sortie du quatrième générateur d'indication de qualité.

VOCODER — MODULATOR — DEMODULATOR — DECODER

FIG. 1

FIG. 2

EP 0 705 512 B1

31

FIG. 3

EP 0 705 512 B1

FIG. 4